# EUROPEAN PATENT APPLICATION

(11) **EP 1 647 920 A1**
(43) Date of publication of application: **19.04.2006**
(21) Application number: 04747648.6
(22) Date of filing: 16.07.2004
(51) Int. Cl.: G06K 19/00, B42D 15/10

(54) **IC CARD AND INFORMATION STORAGE/TRANSMITTER**

(30) Priority: 17.07.2003 JP 2003198282; 16.02.2004 JP 2004038386; 08.03.2004 JP 2004064512
(71) Applicant: HONDA MOTOR CO., Ltd., Tokyo 107-8556 (JP)
(72) Inventor: KATO, Fumihiko, c/o Honda Motor Co., Ltd., Minato-ku, Tokyo 107-8556 (JP); KIRIYAMA, Hiroaki, c/o Honda Motor Co., Ltd., Minato-ku, Tokyo 107-8556 (JP)
(74) Representative: Herzog, Markus
(86) International application number: PCT/JP2004/010182
(87) International publication number: WO 2005/008573

(57) **Abstract**

An IC card is provided into which information can be written without requiring a writer.

The IC card (1) includes an IC chip (3), an antenna (4), and a plurality of circuits (5), which are built into a card main body (2), terminals (6, 7) connected to the extremity of each of the circuits (5), and a conductive sticker (8) affixed to the surface of the card main body (2) and providing continuity between the terminals (6, 7). Among a plurality of the conductive stickers (8), by peeling off a particular conductive sticker (8), continuity of the circuit (5) corresponding to the peeled conductive sticker (8) is broken, and since the IC chip (3) transmits a signal corresponding to the continuity/discontinuity states of the plurality of circuits (5) to a reader, information can be written without requiring a special writer by simply peeling off the conductive sticker (8), thus greatly improving the convenience.

## Description

### TECHNICAL FIELD

The present invention relates to an IC card and an information storage/transmission system that have an IC chip and an antenna built into a card main body and that enable information stored in the IC chip to be read out contactlessly by means of a reader.

### BACKGROUND ART

An information storage/transmission system such as an IC card or an IC tag that enables information to be read or written using a contactless reader and writer is known from Patent Publication 1 and Patent Publication 2 below. This type of IC card or IC tag includes within its IC chip a RAM that allows information to be written and read.
Patent Publication 1: Japanese Patent Application Laid-open No. 2003-85501
Patent Publication 2: Japanese Patent Application Laid-open No. 2001-251687

### DISCLOSURE OF THE INVENTION

### PROBLEMS TO BE SOLVED BY THE INVENTION

However, since conventional IC cards and IC tags require a writer used exclusively for writing information, there is the problem that the writing of information cannot be carried out simply.

The present invention has been accomplished under the above-mentioned circumstances, and it is an object thereof to provide an IC card and an information storage/transmission system that enable information to be written without requiring a writer.

### MEANS FOR SOLVING THE PROBLEMS

In order to attain the above object, according to a first aspect of the present invention, there is proposed an IC card in which an IC chip and an antenna are built into a card main body, information stored in the IC chip being capable of being contactlessly read out by means of a reader, characterized in that the IC card comprises: a circuit switchover part provided on a surface of the card main body; and a circuit connected to the IC chip, continuity/discontinuity states of the circuit being switched over by switching over the circuit switchover part; the IC chip being capable of transmitting to the reader a signal corresponding to the continuity/discontinuity state of the circuit as the stored information.

According to a second aspect of the present invention, there is provided an IC card in which an IC chip and an antenna are built into a card main body, information stored in the IC chip being capable of being contactlessly read out by means of a reader, characterized in that the IC card comprises: a conductive sticker affixed to a surface of the card main body; and a circuit connected to the IC chip, continuity of the circuit being broken by peeling off the conductive sticker; the IC chip being capable of transmitting to the reader a signal corresponding to the continuity/discontinuity state of the circuit as the stored information.

According to a third aspect of the present invention, there is proposed an IC card in which an IC chip and an antenna are built into a card main body, information stored in the IC chip being capable of being contactlessly read out by means of a reader, characterized in that the IC card comprises: a plurality of conductive stickers affixed to a surface of the card main body; and a plurality of circuits connected to the IC chip, continuity of the circuit being broken by peeling off the conductive sticker; the IC chip being capable of transmitting to the reader a signal corresponding to the continuity/discontinuity states of the plurality of circuits as the stored information.

In the first to the third aspects of the present invention, electrodes 6 and 7 of an embodiment correspond to the circuit switchover part.

According to a fourth aspect of the present invention, there is proposed an information storage/transmission system in which an IC chip and an antenna are built into a main body, information stored in the IC chip being capable of being transmitted from the antenna to a reader and read out contactlessly, characterized in that the system comprises: a pair of terminals provided on a surface of the main body and connected to the IC chip; information corresponding to the continuity state of the pair of terminals, which is changed by coating a section between the pair of terminals with a conductive ink, being capable of being transmitted to the reader via the IC chip and the antenna.

According to a fifth aspect of the present invention, in addition to the fourth aspect, the main body is made in the form of a card.

According to a sixth aspect of the present invention, in addition to either the fourth or fifth aspect, after the section between the pair of terminals is coated with the conductive ink, a sheet is affixed to the surface of the main body.

According to a seventh aspect of the present invention, in addition to the sixth aspect, the sheet is transparent.

According to an eighth aspect of the present invention, there is proposed an information storage/transmission system in which an IC chip and an antenna are built into a main body, information stored in the IC chip being capable of being transmitted from the antenna to a reader and read out contactlessly, characterized in that the system comprises: at least one first terminal provided on a surface of the main body and connected to the IC chip; a rotating body rotatably provided on the main body; and a second terminal provided on the rotating body and connected to the IC chip, the second terminal being capable of coming into contact with the first terminal and providing continuity between itself and the first terminal according to a rotational position of the rotating body; information corresponding to the continuity states of the first terminal and the second terminal being capable of being transmitted to the reader via the IC chip and the antenna.

According to a ninth aspect of the present invention, in addition to the eighth aspect, the main body is made in the form of a card.

According to a tenth aspect of the present invention, in addition to either the eighth or ninth aspect, after the rotating body is rotated to a predetermined position, a sheet is affixed so as to straddle the main body surface and the rotating body.

According to an eleventh aspect of the present invention, in addition to the tenth aspect, the sheet is transparent.

According to a twelfth aspect of the present invention, there is proposed an information storage/transmission system in which an IC chip and an antenna are built into a main body, information stored in the IC chip being capable of being transmitted from the antenna to a reader and read out contactlessly, characterized in that the system comprises: a pair of first terminals provided on a surface of the main body and connected to the IC chip; an information storage member that can be mounted on the surface of the main body; an information storage circuit provided on the information storage member; and a pair of second terminals provided on the information storage member and being capable of coming into contact with the pair of first terminals and providing continuity between themselves and the pair of first terminals; information stored in the information storage circuit being capable of being transmitted to the reader via the IC chip and the antenna by means of continuity between the first terminal and the second terminal.

According to a thirteenth aspect of the present invention, in addition to the twelfth aspect, the main body is made in the form of a card.

According to a fourteenth aspect of the present invention, in addition to the twelfth aspect, the information storage member is made in the form of a sticker.

According to a fifteenth aspect of the present invention, in addition to any one of the twelfth to fourteenth aspects, after the information storage member is mounted on the main body, a sheet is affixed so as to straddle the main body surface and the information storage member.

According to a sixteenth aspect of the present invention, in addition to the fifteenth aspect, the sheet is transparent.

In the fourth to the sixteenth aspects of the present invention, a card main body 12 of an embodiment corresponds to the main body, and an information storage member 43 of an embodiment corresponds to the sticker.

According to a seventeenth aspect of the present invention, there is proposed an information storage/transmission system in which an IC chip and an antenna are built into a main body, information stored in the IC chip being capable of being transmitted from the antenna to a reader and read out contactlessly, characterized in that the system comprises: a rotating shaft rotatably supported on the main body and having part of a surface formed from a conductor; and a first terminal and a second terminal connected to the IC chip and being capable of coming into contact with the conductor; information corresponding to the continuity states of the first terminal and the second terminal, which change in response to rotation of the rotating shaft, being capable of being transmitted to the reader via the IC chip and the antenna.

According to an eighteenth aspect of the present invention, in addition to the seventeenth aspect, when the attitude of the main body is changed, the rotating shaft rotates relative to the main body so as to maintain a constant attitude relative to the direction of gravity.

In the seventeenth and eighteenth aspects of the present invention, a casing 112 of an embodiment corresponds to the main body, and a conductive coating 119 of an embodiment corresponds to the conductor.

### EFFECTS OF THE INVENTION

In accordance with the first aspect of the present invention, since the continuity/discontinuity states of the circuit are switched over by switching over the circuit switchover part provided on the surface of the card main body, and the IC chip built into the card main body transmits a signal to the reader according to the continuity/discontinuity state of the circuit, information can be written without requiring a special writer, thus greatly improving the convenience.

In accordance with the second aspect of the present invention, since the continuity/discontinuity states of the circuit are switched over according to whether or not the conductive sticker affixed to the surface of the card main body is peeled off, and the IC chip built into the card main body transmits to the reader a signal according to the continuity/discontinuity state of the circuit, information can be written without requiring a special writer by simply peeling off the conductive sticker, thus greatly improving the convenience.

In accordance with the third aspect of the present invention, since, among the plurality of conductive stickers affixed to the surface of the card main body, when a given conductive sticker is peeled off, the continuity of a circuit corresponding to the peeled-off conductive sticker is broken, and the IC chip built into the card main body transmits a signal corresponding to the continuity/discontinuity states of the plurality of circuits to the reader, information can be written without requiring a special writer by simply peeling off the conductive sticker, thus greatly improving the convenience.

In accordance with the fourth aspect of the present invention, when a section between the pair of terminals provided on the surface of the main body of the information storage/transmission system is coated with a conductive ink so as to provide continuity, since information according to the continuity state is transmitted to the reader via the IC chip and the antenna, information can be written into the information storage/transmission system without requiring a special writer, thus greatly improving the convenience.

In accordance with the fifth aspect of the present invention, since the main body of the information storage/transmission system is made in the form of a card, it has a compact shape, and not only is it convenient for carrying around and storing, but it can also be placed on a desk or a table in a stable manner, thus making coating with the conductive ink easy.

In accordance with the sixth aspect of the present invention, since the sheet is affixed to the surface of the main body, which is coated with the conductive ink, it is possible to prevent the conductive ink from peeling off or being tampered with.

In accordance with the seventh aspect of the present invention, since the sheet affixed to the surface of the main body is transparent, the condition of the conductive ink coating can be checked visually.

In accordance with the eighth aspect of the present invention, since, when the rotating body provided on the surface of the main body of the information storage/transmission system is rotated to the predetermined position the continuity state between the first terminal provided on the main body and the second terminal provided on the rotating body changes and information according to the continuity state is transmitted to the reader via the IC chip and the antenna, information can be written into the information storage/transmission system without requiring a special writer, thus greatly improving the convenience.

In accordance with the ninth aspect of the present invention, since the main body of the information storage/transmission system is made in the form of a card, it has a compact shape, and not only is it convenient for carrying around and storing, but it can also be placed on a desk or a table in a stable manner, thus making the operation of rotating the rotating body easy.

In accordance with the tenth aspect of the present invention, since the sheet is affixed so as to straddle the main body surface and the rotating body, which has been rotated to the predetermined position, it is possible to prevent unintended rotation of the rotating body or tampering with it by intentional rotation.

In accordance with the eleventh aspect of the present invention, since the sheet affixed to the main body surface and the rotating body is transparent, the rotational position of the rotating body can be checked visually.

In accordance with the twelfth aspect of the present invention, since, when the predetermined information storage member is mounted on the surface of the main body of the information storage/transmission system so as to provide continuity between the first terminal of the main body and the second terminal of the information storage member, information stored in the information storage circuit of the information storage member is transmitted to the reader via the IC chip and the antenna, information can be written into the information storage/transmission system without requiring a special writer, thus greatly improving the convenience.

In accordance with the thirteenth aspect of the present invention, since the main body of the information storage/transmission system is made in the form of a card, it has a compact shape, and not only is it convenient for carrying around and storing, but it can also be placed on a desk or a table in a stable manner, thus making mounting of the information storage member easy.

In accordance with the fourteenth aspect of the present invention, since the information storage member is made in the form of a sticker, it can be mounted on the main body part by simply sticking it on.

In accordance with the fifteenth aspect of the present invention, since the sheet is affixed so as to straddle the main body surface and the information storage member, it is possible to prevent the information storage member from falling off or being tampered with by intentionally swapping it.

In accordance with the sixteenth aspect of the present invention, since the sheet affixed to the main body surface and the information storage member is transparent, the type of information storage member and the mounted condition thereof can be checked visually.

In accordance with the seventeenth aspect of the present invention, since, when the rotating shaft rotatably supported on the main body of the information storage/transmission system is rotated to the predetermined position, the continuity states of the first and second terminals, which can come into contact with the conductor provided on part of the surface of the rotating shaft, change, and information according to the continuity state is transmitted to the reader via the IC chip and the antenna, information can be written into the information storage/transmission system without requiring a special writer, thus greatly improving the convenience.

In accordance with the eighteenth aspect of the present invention, since, when the attitude of the main body is changed, the rotating shaft rotates so as to maintain a certain attitude relative to the direction of gravity, information can be written into the information storage/transmission system by the simple operation of merely changing the attitude of the main body.

### BRIEF DESCRIPTION OF THE DRAWINGS

[FIG. 1] FIG. 1 is a front view of an IC card related to a first embodiment (embodiment 1).
[FIG. 2] FIG. 2 is a diagram showing a state in which a skin of the IC card is removed (embodiment 1).
[FIG. 3A] FIG. 3A is a diagram showing a state in which conductive stickers of the IC card are not peeled off (embodiment 1).
[FIG. 3B] FIG. 3B is a diagram showing a state in which some of the conductive stickers of the IC card are peeled off (embodiment 1).
[FIG. 3C] FIG. 3C is a diagram showing a state in which some of the conductive stickers of the IC card are peeled off (embodiment 1).
[FIG. 4] FIG. 4 is a front view of an IC card related to a second embodiment (embodiment 2).
[FIG. 5A] FIG. 5A is a diagram showing a state in which a conductive sticker of the IC card is not peeled off (embodiment 2).
[FIG. 5B] FIG. 5B is a diagram showing a state in which the conductive sticker of the IC card is peeled off. (embodiment 2).
[FIG. 6] FIG. 6 is a front view of an IC card related to a third embodiment (embodiment 3).
[FIG. 7] FIG. 7 is a diagram showing a state in which a skin of the IC card is removed (embodiment 3).
[FIG. 8] FIG. 8 is a diagram showing a state in which the IC card is marked by means of a conductive ink (embodiment 3).
[FIG. 9] FIG. 9 is a diagram showing a state in which a sheet is affixed to the IC card (embodiment 3).
[FIG. 10A] FIG. 10A is a diagram showing an example of information written into the IC card (embodiment 3).
[FIG. 10B] FIG. 10B is a diagram showing an example of information written into the IC card (embodiment 3).
[FIG. 11] FIG. 11 is a diagram showing a state in which a skin of an IC card related to a fourth embodiment is removed (embodiment 4).
[FIG. 12A] FIG. 12A is a diagram showing an example of information written into the IC card (embodiment 4).
[FIG. 12B] FIG. 12B is a diagram showing an example of information written into the IC card (embodiment 4).
[FIG. 13] FIG. 13 is a front view of an IC card related to a fifth embodiment (embodiment 5).
[FIG. 14] FIG. 14 is a diagram showing a state in which a skin of the IC card is removed (embodiment 5).
[FIG. 15] FIG. 15 is a diagram showing a state in which a sheet is affixed to the IC card (embodiment 5).
[FIG. 16] FIG. 16 is a diagram showing a state in which a skin of an IC card related to a sixth embodiment is removed (embodiment 6).
[FIG. 17A] FIG. 17A is a diagram showing an example of information written into the IC card. (embodiment 6).
[FIG. 17B] FIG. 17B is a diagram showing an example of information written into the IC card (embodiment 6).
[FIG. 18] FIG. 18 is a front view of an IC card and a sticker related to a seventh embodiment (embodiment 7).
[FIG. 19] FIG. 19 a diagram showing a state in which skins of the IC card and the sticker are removed (embodiment 7).
[FIG. 20] FIG. 20 is a diagram showing a state in which the sticker is affixed to the IC card (embodiment 7).
[FIG. 21] FIG. 21 is a diagram showing a state in which a sheet is affixed to the IC card (embodiment 7).
[FIG. 22A] FIG. 22A is a diagram showing an example of information written into the IC card (embodiment 7).
[FIG. 22B] FIG. 22B is a diagram showing an example of information written into the IC card (embodiment 7).
[FIG. 23] FIG. 23 is a perspective view of an information storage/transmission system related to an eighth embodiment (embodiment 8).
[FIG. 24] FIG. 24 is a sectional view along line 24-24 in FIG. 23 (embodiment 8).
[FIG. 25] FIG. 25 is a sectional view along line 25-25 in FIG. 24 (embodiment 8).
[FIG. 26] FIG. 26 is a diagram for explaining the operation corresponding to FIG. 24 (embodiment 8).
[FIG. 27] FIG. 27 is a diagram for explaining the operation corresponding to FIG. 25 (embodiment 8).
[FIG. 28]FIG. 28 is a perspective view of an information storage/transmission system related to a ninth embodiment (embodiment 9).
[FIG. 29] FIG. 29 is a sectional view along line 29-29 in FIG. 28 (embodiment 9).
[FIG. 30] FIG. 30 is a sectional view along line 30-30 in FIG. 29 (embodiment 9).
[FIG. 31] FIG. 31 is a diagram for explaining the operation corresponding to FIG. 29 (embodiment 9).
[FIG. 32]FIG. 32 is a diagram for explaining the operation corresponding to FIG. 30 (embodiment 9).
[FIG. 33] FIG. 33 is a perspective view of an information storage/transmission system related to a tenth embodiment (embodiment 10).
[FIG. 34] FIG. 34 is a sectional view along line 34-34 in FIG. 33 (embodiment 10).
[FIG. 35] FIG. 35 is a diagram for explaining the operation corresponding to FIG. 34 (embodiment 10).
[FIG. 36] FIG. 36 is a perspective view of an information storage/transmission system related to an eleventh embodiment (embodiment 11).
[FIG. 37] FIG. 37 is a sectional view along line 37-37 in FIG. 36 (embodiment 11).
[FIG. 38] FIG. 38 is a diagram for explaining the operation corresponding to FIG. 37 (embodiment 11).

### EXPLANATION OF REFERENCE NUMERALS AND SYMBOLS

- 2: Card Main Body
- 3: IC Chip
- 4: Antenna
- 5: Circuit
- 6: Electrode (Circuit Switchover part)
- 7: Electrode (Circuit Switchover part)
- 8: Conductive Sticker
- 12: Card Main Body (Main Body)
- 13: IC Chip
- 14: Antenna
- 15: Terminal
- 16: Terminal
- 20: Conductive Ink
- 21: Sheet
- 31: Rotating Body
- 33: First Terminal
- 35: Second Terminal
- 41: First Terminal
- 43: Information Storage Member (Sticker)
- 44: Second Terminal
- 45: Information Storage Circuit
- 112: Casing (Main Body)
- 114: IC Chip
- 115: Antenna
- 117: Rotating Shaft
- 119: Conductive Coating (Conductor)
- 121: First Terminal
- 122: Second Terminal
- 122a: Second Terminal
- 112b: Second Terminal

### BEST MODE FOR CARRYING OUT THE INVENTION

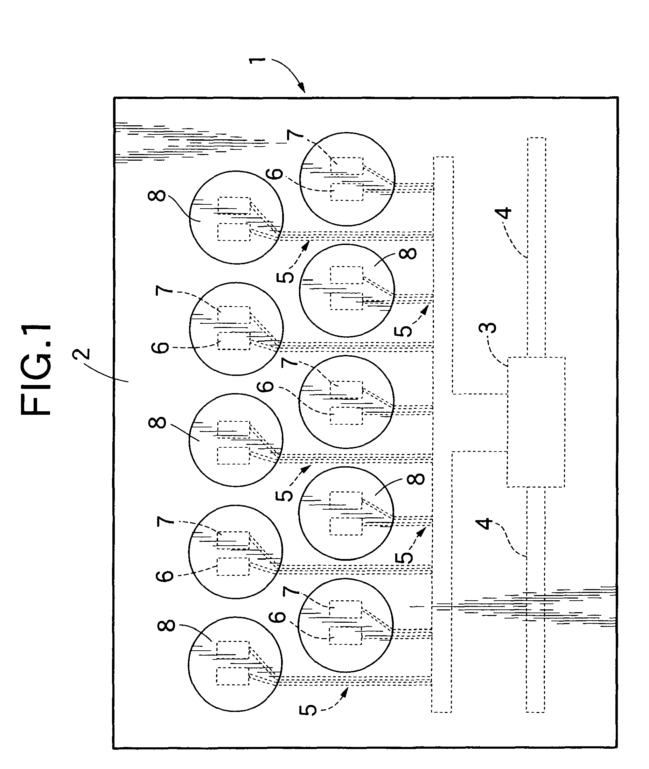

A first embodiment of the present invention is explained below by reference to FIG. 1 to FIG. 3C.

### Embodiment 1

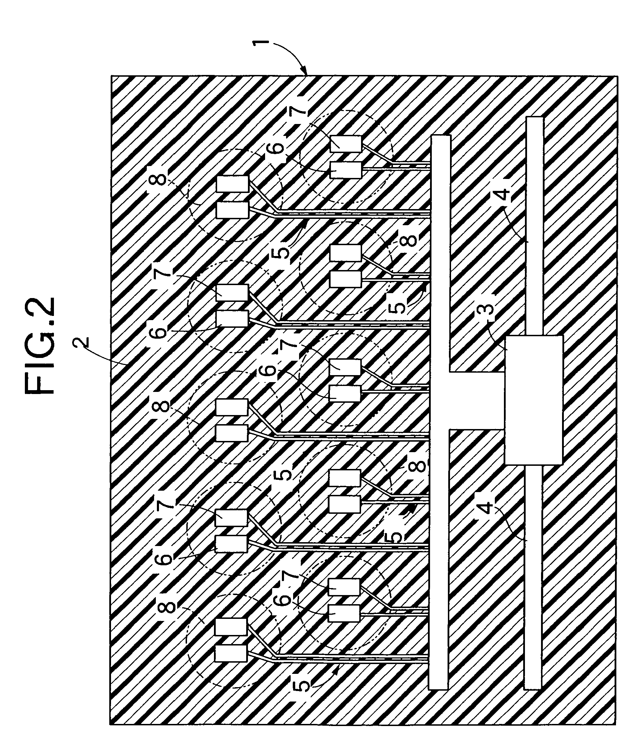

As shown in FIG. 1 and FIG. 2, an IC card 1 includes a card main body 2 formed from a synthetic resin into a rectangular plate shape and having embedded therein an IC chip 3 that includes a CPU, a ROM, an I/O etc., an antenna 4 for carrying out wireless communication with an external reader, and a plurality (10 in the embodiment) of circuits 5 connected to the IC chip 3. Pairs of electrodes 6 and 7 are connected to the extremity of each of the circuits 5, the electrodes 6 and 7 being adjacent to each other and exposed on the surface of the card main body 2. Ten conductive stickers 8 are affixed to the surface of the card main body 2 by means of an adhesive, electrical continuity between each pair of the electrodes 6 and 7 being provided by means of the corresponding conductive sticker 8. The conductive stickers 8 are formed from a conductive material such as, for example, aluminum foil.

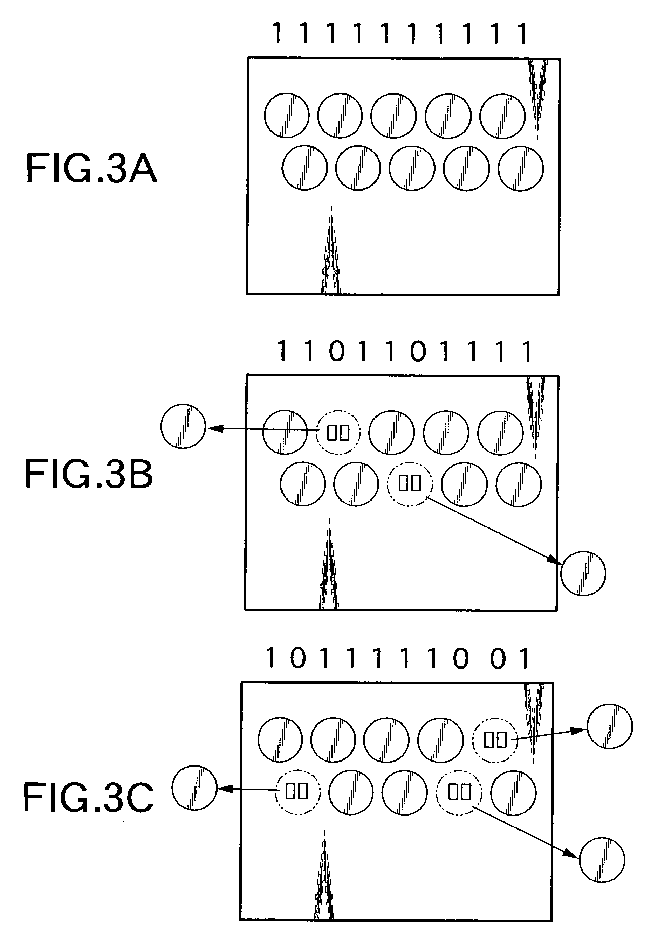

If, when there is continuity between the pair of electrodes 6 and 7, a signal inputted into the IC chip 3 is '1', and when there is not continuity between the pair of electrodes 6 and 7, the signal inputted into the IC chip 3 is '0', as shown in FIG. 3A, the signal in a state in which all ten of the conductive stickers 8 are affixed is '1111111111'. Furthermore, as shown in FIG. 3B, the signal in a state in which, among the ten conductive stickers 8, the third and sixth conductive stickers 8 are peeled off is '1101101111'. Furthermore, as shown in FIG. 3C, the signal in a state in which, among the ten conductive stickers 8, the first, eighth, and ninth conductive stickers 8 are peeled off is '0111111001'. In this way, by peeling off any of the ten conductive stickers 8, 10 bits, that is, 1024 different pieces of information, can be stored. That is, the electrodes 6 and 7 and the conductive stickers 8 of the present embodiment form a simple RAM that enables information to be written and read.

By placing this IC card 1 close to the reader, wireless communication is carried out via the antenna 4, and information according to the state in which the conductive stickers 8 are affixed can be read out contactlessly. In this way, information can be written into the IC card 1 without requiring a special writer by simply peeling off the conductive stickers 8, thus greatly improving the convenience.

Use of this IC card 1 makes the grouping of items having the same features easy. For example, when a completed vehicle is subjected to a completion inspection in a factory, the IC card 1 in which the first, fifth, and eighth conductive stickers 8 are peeled off is attached to a vehicle with imperfect paint, the IC card 1 in which the third, sixth, and eighth conductive stickers 8 are peeled off is attached to a vehicle with an imperfect gap in a part where components are joined, and by reading out the contents stored in each IC card 1 by means of a portable reader, vehicles with the same imperfection can easily be grouped.

Furthermore, when a family goes to a department store, if each member of the family possesses the IC card 1 with the same conductive stickers 8 peeled off and each member who separately and individually moves around lets the nearest terminal to their present position read the contents stored in their own IC card 1, the current position of another member can be found out instantaneously via any terminal.

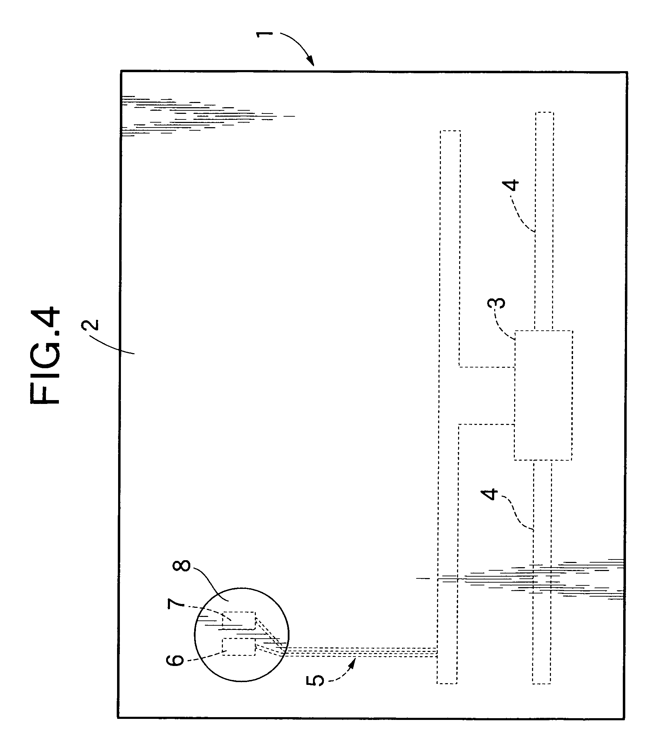

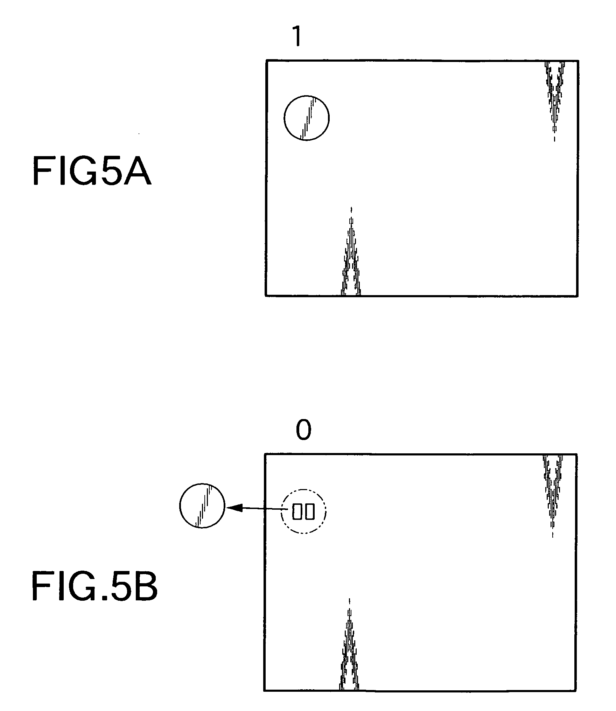

A second embodiment of the present invention is now explained by reference to FIG. 4 and FIG. 5C.

### Embodiment 2

Whereas the IC card 1 of the first embodiment includes the ten conductive stickers 8, an IC card 1 of a second embodiment includes only one conductive sticker 8. Therefore, two types of signals '1' and '0' can be stored, for a state in which the conductive sticker 8 is not peeled off and a state in which the conductive sticker 8 is peeled off. Therefore, this IC card 1 is attached to a work instruction, and by peeling off the conductive sticker 8 when the work is completed, information regarding completion of the work can automatically be outputted to a reader.

Although the first and second embodiments of the present invention are explained above, the present invention can be modified in a variety of ways as long as the modifications do not depart from the spirit and scope thereof.

For example, although the IC card 1 of the embodiments includes ten or one conductive stickers 8, the number of conductive stickers 8 can be chosen freely, and the greater the number thereof, the greater the amount of information that can be stored.

In general, an IC card is indicative of a thin object, and an IC tag is indicative of a thick object, but the IC card 1 referred to in the present invention is not limited to a thin object, and includes a thick object.

Furthermore, it is not necessary for the entirety of the conductive sticker 8 to be formed from a conductive material, and it may be arranged so that only portions that are in contact with the electrodes 6 and 7 and provide continuity are formed from the conductive material.

Moreover, in the embodiments, information is stored by peeling off the conductive sticker 8, but it is also possible to store information by affixing the conductive sticker 8.

Furthermore, instead of using the conductive sticker 8, it is also possible to provide continuity for the circuit 5 by drawing a line between the electrodes 5 and 6 using a conductive pen, to cut part of the circuit 5 by means of scissors, etc. so as to break the continuity, or to switch over between the continuity/discontinuity states of the circuit 5 by means of a simple switch.

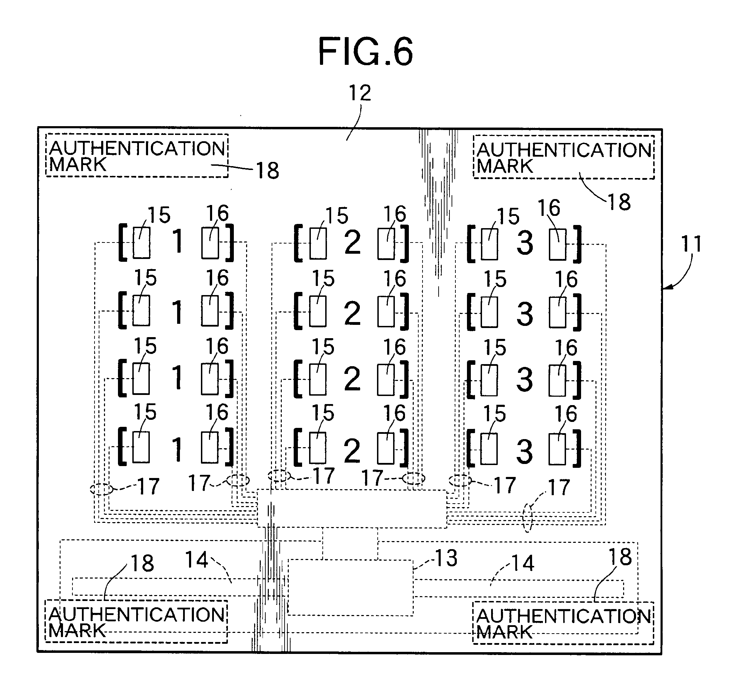

A third embodiment of the present invention is now explained by reference to FIG. 6 to FIG. 10B.

### Embodiment 3

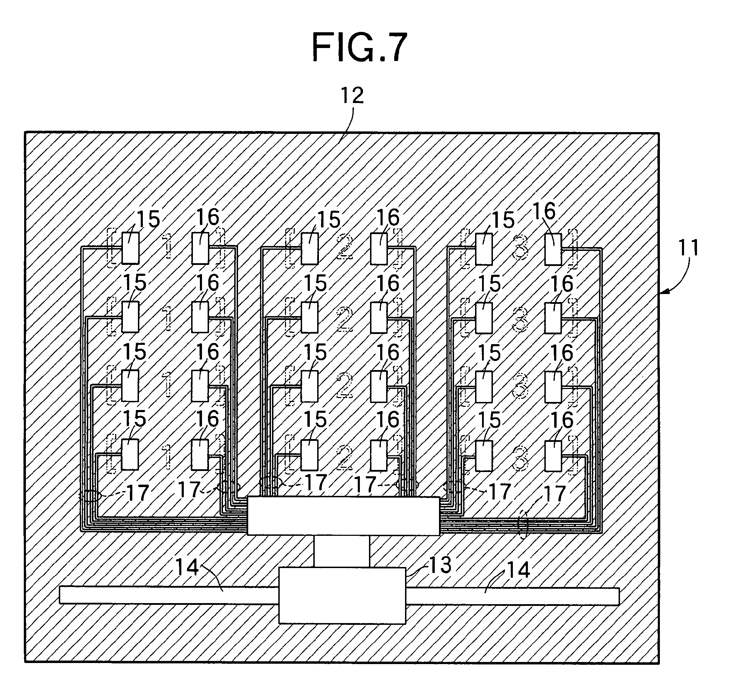

As shown in FIG. 6 and FIG. 7, an IC card 11 includes a card main body 12 formed from a synthetic resin into a rectangular plate shape and having embedded therein an IC chip 13 that includes a CPU, a ROM, an I/O, etc. and an antenna 14 for carrying out wireless communication with an external reader (not illustrated). Three sets of two conductive terminals 15 and 16 are provided in each of four tiers on the surface of the IC card 11, making a total of 12 pairs, and these 12 pairs of the terminals 15 and 16 are connected to the IC chip 13 via leads 17 embedded in the card main body 12. Any one of three numerals [1], [2], and [3] are printed for identification in the vicinity of the terminals 15 and 16 of each pair, and four authentication marks 18 are printed at four corners of the card main body 12. The authentication marks 18 are printed using a special ink in order to prevent it from easily peeling off.

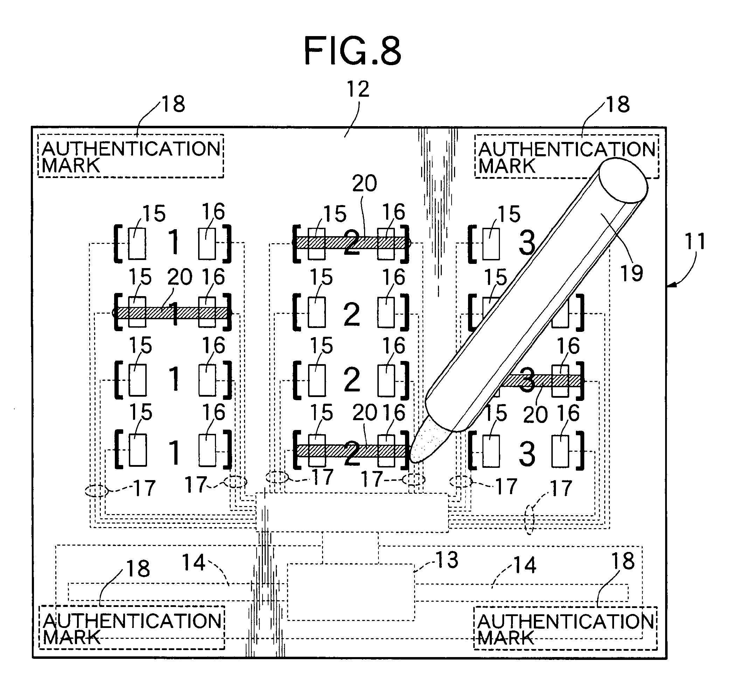

As shown in FIG. 8, in order to store information in the IC card 11 a pen 19 for applying a conductive ink is used; among the three pairs of terminals 15 and 16 of each tier, for example, for the first tier a section between the pair of terminals 15 and 16 corresponding to [2], which is in the middle, is coated with a conductive ink 20 using the pen 19, for the second tier a section between the pair of terminals 15 and 16 corresponding to [1], which is on the left-hand side, is coated with the conductive ink 20 using the pen 19, for the third tier a section between the pair of terminals 15 and 16 corresponding to [3], which is on the right-hand side, is coated with the conductive ink 20 using the pen 19, and for the fourth tier a section between the pair of terminals 15 and 16 corresponding to [2], which is in the middle, is coated with the conductive ink 20 using the pen 19.

The composition of the conductive ink 20 is known and is disclosed in, for example, Japanese Patent Application Laid-open No. 2001-49170.

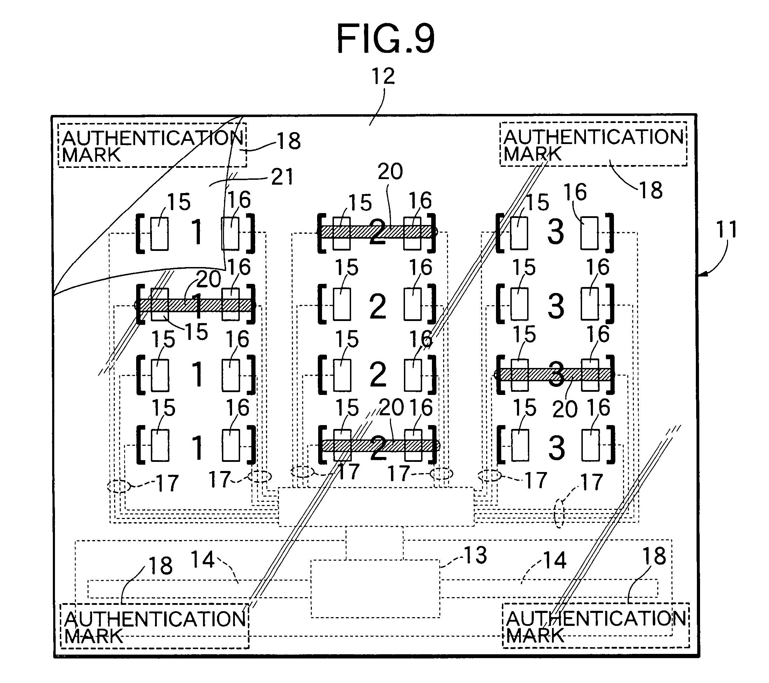

Subsequently, as shown in FIG. 9, a transparent adhesive film sheet 21 is affixed to the surface of the main body 12 of the IC card 11. This can prevent the applied conductive ink 20 from peeling off by being rubbed and prevent tampering with information by removal or reapplication of the conductive ink 20 and, moreover, since the applied conductive ink 20 can be viewed through the transparent sheet 21, the stored information can easily be checked. In particular, if the sheet 21 is peeled off once it has been affixed, the authentication mark 18 adheres to the adhesive of the sheet 21 and comes off, and tampering with the information can be reliably detected. It is not necessary for the sheet 21 to be affixed to the entirety of the surface of the main body 12, and if it is affixed to an area covering the terminals 15 and 16, the effect can be exhibited sufficiently.

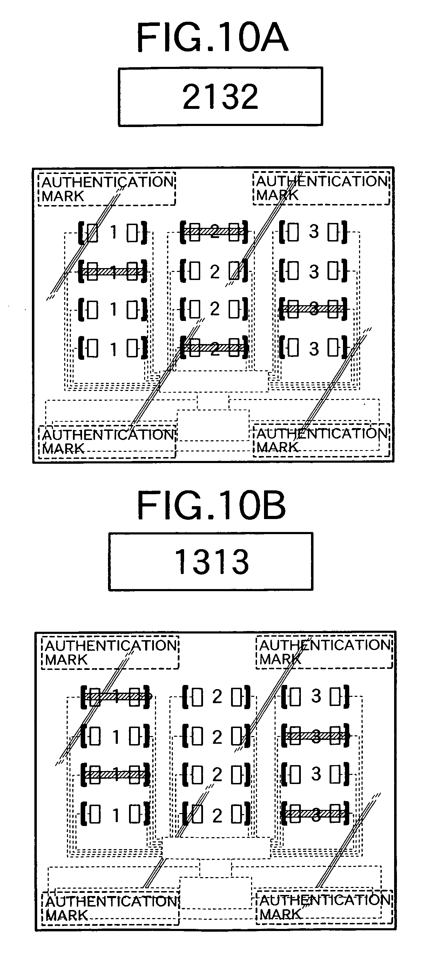

By coating a section between the pair of terminals 15 and 16 corresponding to [1] with the conductive ink 20 so as to provide electrical continuity, the output from the three pairs of terminals 15 and 16 of that tier becomes [1,0,0] and the information for [1] is stored in the IC chip 13; by coating a section between the pair of terminals 15 and 16 corresponding to [2] with the conductive ink 20 so as to provide electrical continuity, the output from the three pairs of terminals 15 and 16 of that tier becomes [0,1,0] and the information for [2] is stored in the IC chip 13; and by coating a section between the pair of terminals 15 and 16 corresponding to [3] with the conductive ink 20 so as to provide electrical continuity, the output from the three pairs of terminals 15 and 16 of that tier becomes [0,0,1] and the information for [3] is stored in the IC chip 13. Therefore, in the coated state of FIG. 10A the information [2132] is written, and in the coated state of FIG. 10B the information [1313] is written.

Therefore, by placing this IC card 11 close to the reader, wireless communication is carried out via the antenna 14, and information corresponding to the coated state of the conductive ink 20 can be read out contactlessly. In this way, information can be written into the IC card 11 without requiring a special writer by simply coating with the conductive ink 20 using the pen 19, thus greatly enhancing the convenience. In particular, since the IC card 11 is thin, not only is it convenient for carrying around and storing, but it can also be placed on a desk or a table in a stable manner, and coating with the conductive ink 20 using the pen 19 becomes easy.

Use of this IC card 11 makes the grouping of items having the same features easy. For example, when a completed vehicle is subjected to a completion inspection in a factory, a 4-digit code number formed from the three numerals [1] to [3] is decided according to an imperfection, the IC card 11 having these numerals marked with the conductive ink 20 is affixed to a vehicle, and by reading out the contents stored in each IC card 11 by means of a portable reader, vehicles with the same imperfection can easily be grouped.

Furthermore, when a family goes to a department store, if each member of the family possesses the IC card 11 having the same numerals marked and each member who separately and individually moves around lets the nearest terminal to their present position read the contents stored in their own IC card 11, the current position of another member can be found out instantaneously via any terminal.

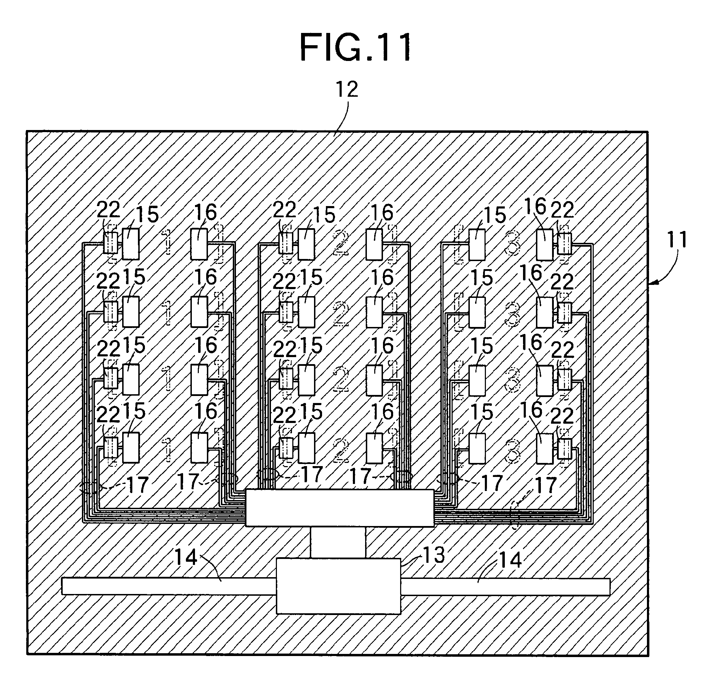

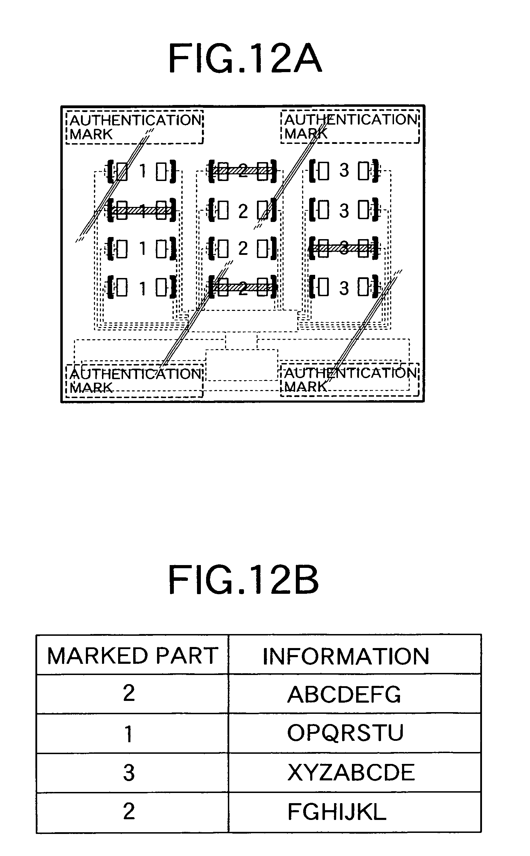

A fourth embodiment of the present invention is now explained by reference to FIG. 11, FIG. 12A, and FIG. 12B. In the fourth embodiment to a seventh embodiment, members corresponding to the members of the preceding embodiments (the third embodiment and thereafter) are denoted by the same reference numerals and symbols as in these embodiments, thereby avoiding duplication of the explanation.

### Embodiment 4

As shown in FIG. 11, an IC card 11 of a fourth embodiment includes an information storage circuit 22 for each of leads 17 connected to terminals 15, and these information storage circuits 22 store different pieces of information in advance. In the examples shown in FIG. 12A and FIG. 12B, when a section between a pair of terminals 15 and 16 corresponding to [2], which is in the middle, of a first tier is coated with a conductive ink 20, information [ABCDEFG] stored in the corresponding information storage circuit 22 is stored in an IC chip 13; when a section between a pair of terminals 15 and 16 corresponding to [1], which is on the left-hand side, of a second tier is coated with the conductive ink 20, information [OPQRSTU] stored in the corresponding information storage circuit 22 is stored in the IC chip 13; when a section between a pair of terminals 15 and 16 corresponding to [3], which is on the right-hand side, of a third tier is coated with the conductive ink 20, information [XYZABCDE] stored in the corresponding information storage circuit 22 is stored in the IC chip 13; and when a section between a pair of terminals 15 and 16 corresponding to [2], which is in the middle, of a fourth tier is coated with the conductive ink 20, information [FGHIJKL] stored in the corresponding information storage circuit 22 is stored in the IC chip 13.

Therefore, in accordance with the fourth embodiment, in comparison with the third embodiment, complicated information can be stored.

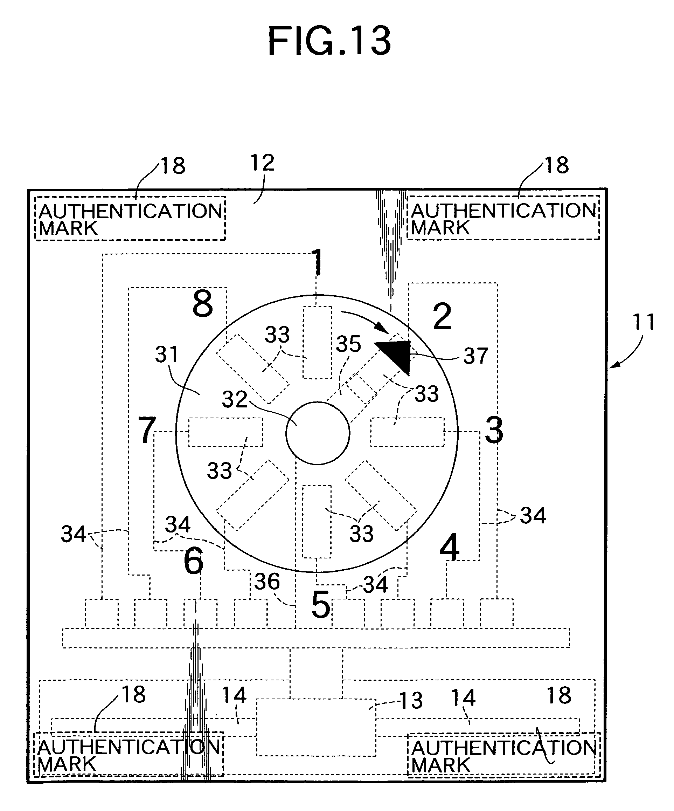

A fifth embodiment of the present invention is now explained by reference to FIG. 13 to FIG. 15.

### Embodiment 5

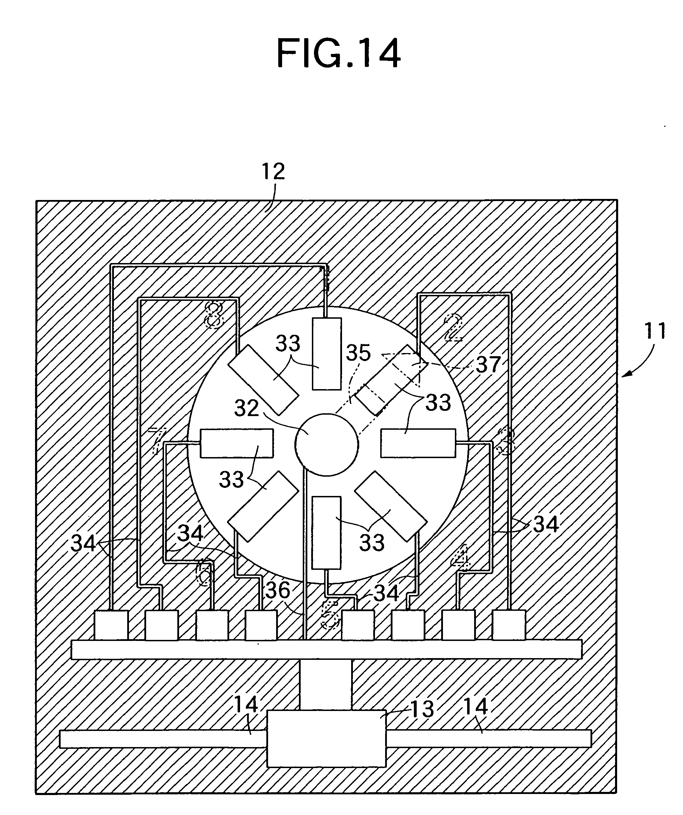

As shown in FIG. 13 and FIG. 14, a disk-shaped rotating body 31 is rotatably supported on a middle part of the surface of a card main body 12 of an IC card 11 of the fifth embodiment via a support shaft 32. Eight first terminals 33 are provided on the surface of the card main body 12 so as to face the reverse face of the rotating body 31, and these first terminals 33 are connected to an IC chip 13 via leads 34 embedded in the card main body 12. One second terminal 35, which can make contact with any one of the eight first terminals 33, is provided on the reverse face of the rotating body 31, and this second terminal 35 is connected to the IC chip 13 via a lead 36 embedded in the card main body 12. A triangular mark 37 is provided at a position of the surface of the rotating body 31 corresponding to the second terminal 35, and numerals [1] to [8] are printed at positions, along the outer periphery of the rotating body 31, of the card main body 12 so as to correspond to the eight first terminals 33.

Therefore, when the rotating body 31 is rotated so as to position the mark 37 to face, for example, numeral [2], the second terminal 35 of the rotating body 31 comes into contact with the first terminal 33 corresponding to numeral [2], thus providing electrical continuity.

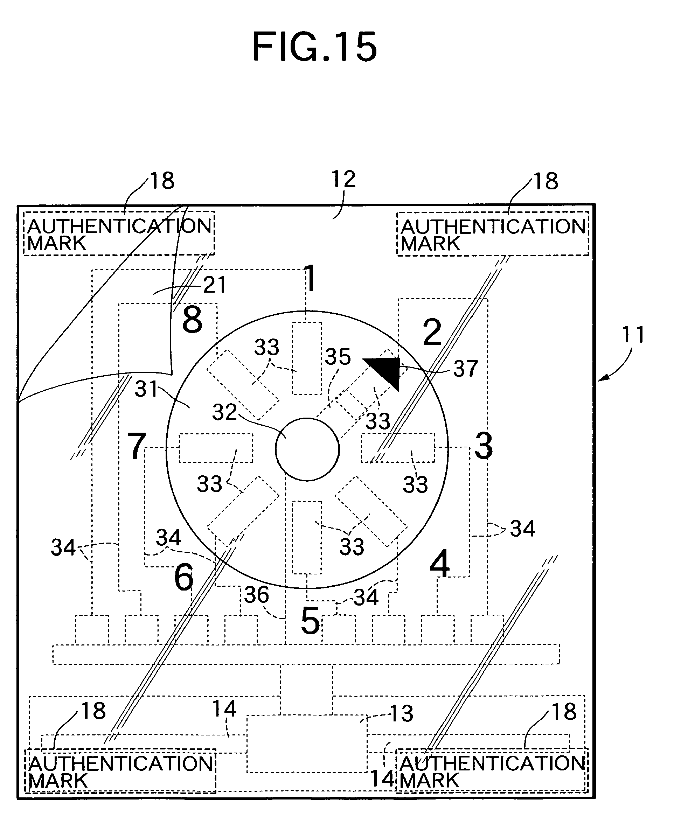

Subsequently, as shown in FIG. 15, a transparent adhesive film sheet 21 is affixed so as to straddle the surface of the card main body 12 of the IC card 11 and the rotating body 31. This can prevent unintended rotation of the rotating body 31 or tampering with it by intentional rotation. In this case also, since the rotational position of the rotating body 31 can be viewed through the transparent sheet 21, the stored information can easily be checked and, furthermore, since the authentication marks 18 come off if the sheet 21 is peeled off once it has been affixed, tampering with the information can be reliably detected. It is not necessary for the sheet 21 to be affixed to the entirety of the card main body 12, and by affixing it so that it straddles part of the surface of the card main body 12 and part of the rotating body 31, rotation of the rotating body 31 can be prevented.

By adjusting the mark 37 of the rotating body 31 to the position of numeral [2], the output of the eight first terminals 33 corresponding to numerals [1] to [8] becomes [01000000], and information for [2] is stored in the IC chip 13. In this way, by making the mark 37 of the rotating body 31 face the position corresponding to any one of the numerals [1] to [8], information for any one of [1] to [8] can be written into the IC chip 13.

As a result, by placing this IC card 11 close to the reader, wireless communication is carried out via an antenna 14, and information corresponding to the rotational position of the rotating body 31 can be read out contactlessly. In this way, information can be written into the IC card 11 without requiring a special writer by simply rotating the rotating body 31, and the convenience can be greatly enhanced. In particular, since the IC card 11 is thin, not only is it convenient for carrying around and storing, but it can also be placed on a desk or a table in a stable manner, and rotation of the rotating body 31 is easy.

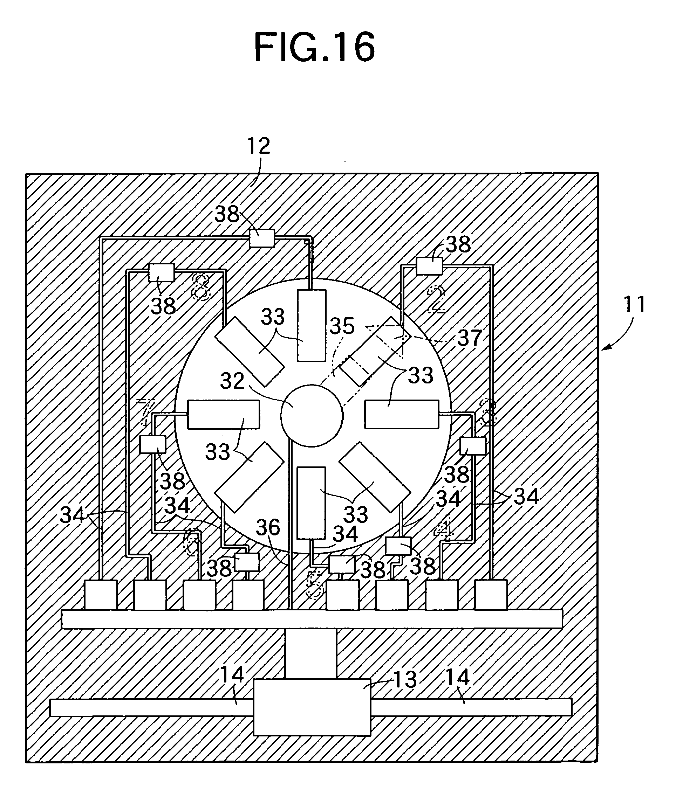

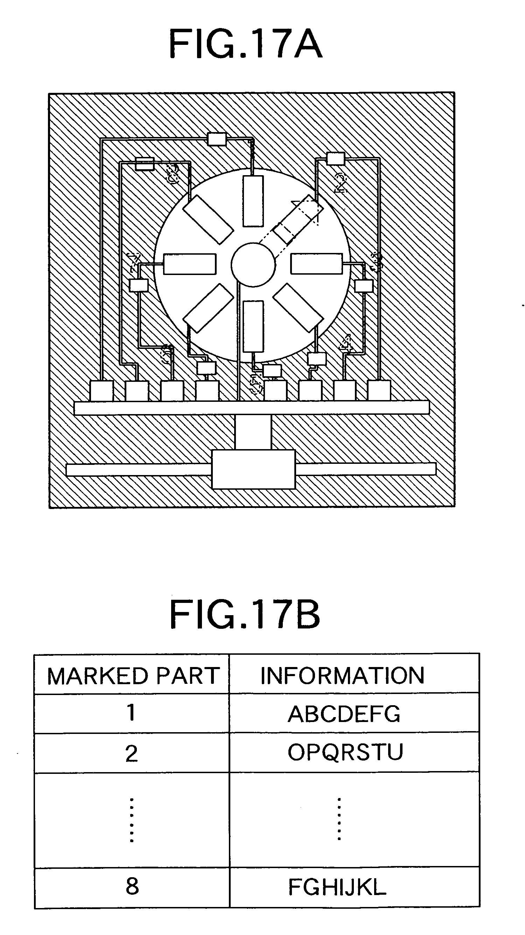

A sixth embodiment of the present invention is now explained by reference to FIG. 16, FIG. 17A, and FIG. 17B.

### Embodiment 6

As shown in FIG. 16, an IC card 11 of the sixth embodiment includes an information storage circuit 38 in a lead 34 connected to each of first terminals 33, and different pieces of information are stored in these information storage circuits 38 in advance. In an example shown in FIG. 16, since a rotating body 31 is rotated to a position corresponding to a numeral [2], information [OPQRSTU] stored in the corresponding information storage circuit 38 is stored in an IC chip 13.

Therefore, in accordance with the sixth embodiment, compared with the fifth embodiment, more complicated information can be stored.

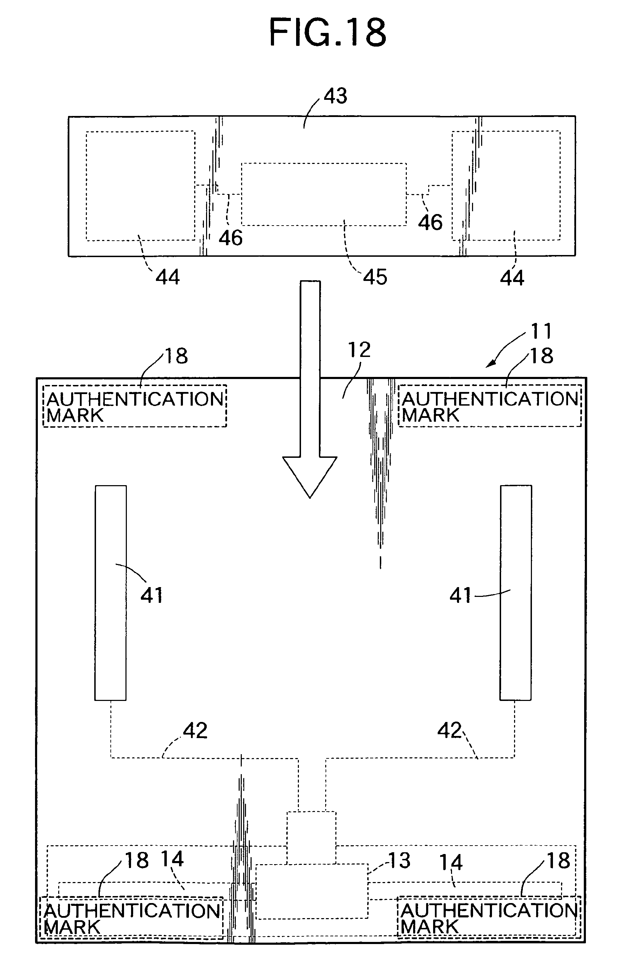

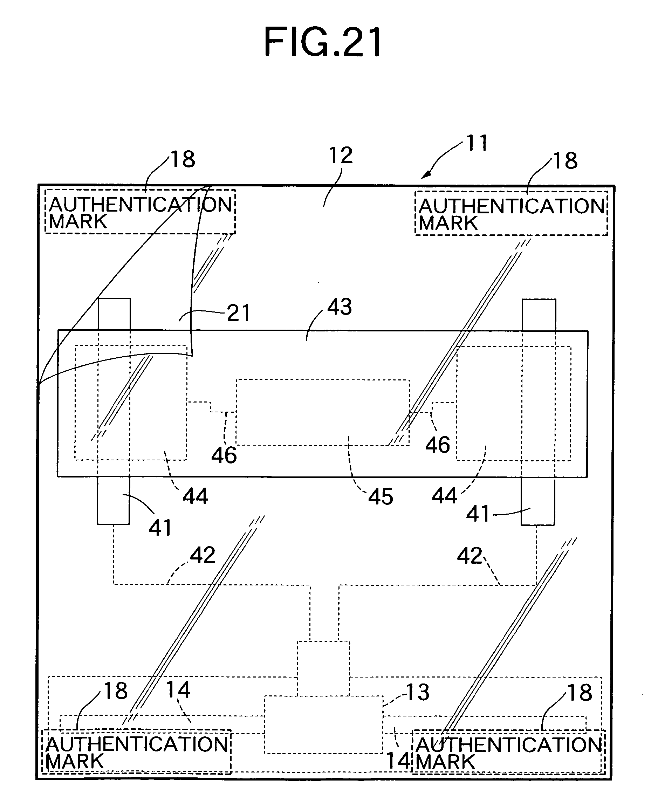

A seventh embodiment of the present invention is now explained by reference to FIG. 18 to FIG. 22B.

### Embodiment 7

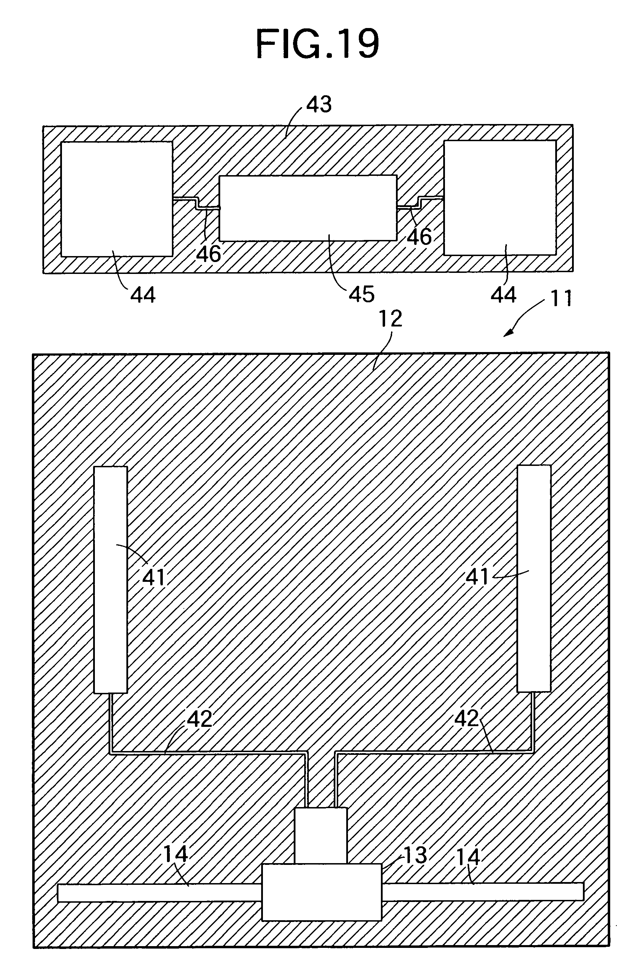

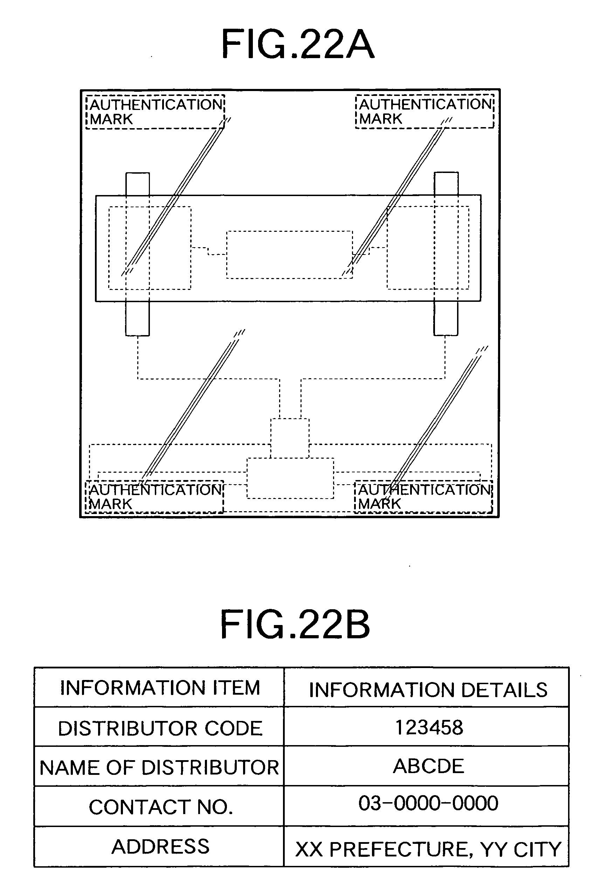

As shown in FIG. 18 and FIG. 19, a pair of first terminals 41 are provided on the surface of a card main body 12 of an IC card 11, the first terminals 41 being separated in the left-and-right direction and connected to an IC chip 13 via leads 42 embedded in the card main body 12. A sticker 43 that has an adhesive and can be affixed to the surface of the card main body 12 includes a pair of second terminals 44 exposed on its reverse face (which faces the surface of the card main body 12), and these second terminals 44 are connected via leads 46 to an information storage circuit 45 embedded in the sticker 43. For example, information shown in FIG. 22B is stored in the information storage circuit 45 in advance, and there are provided in advance a plurality of stickers 43 whose stored contents are different from each other.

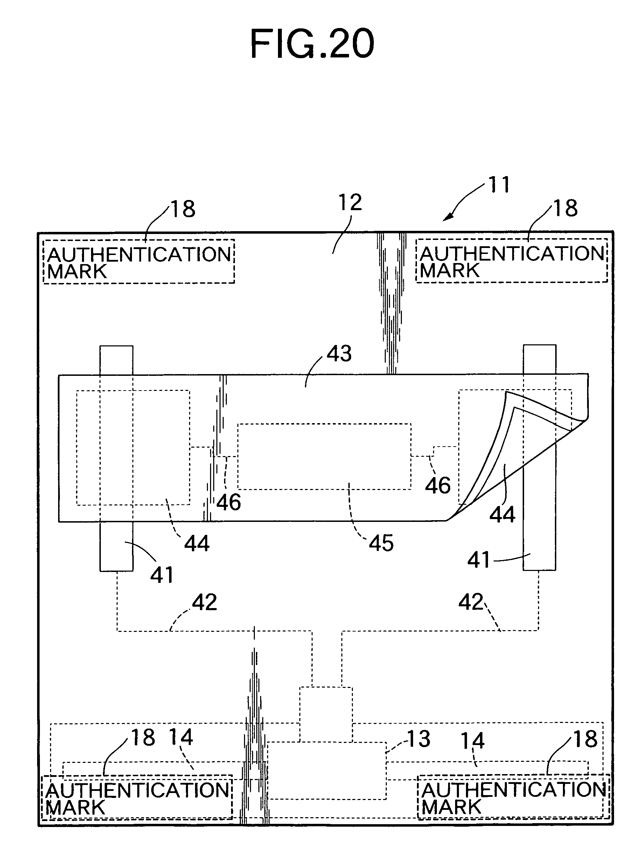

Among the plurality of stickers 43, which are provided in advance, a given sticker 43 that is to be stored in the IC card 11 is selected and affixed to a predetermined position of the card main body 12 as shown in FIG. 20, the first terminals 41 of the card main body 12 come into contact with the second terminals 44 of the sticker 43 so as to establish electrical continuity, and information stored in the information storage circuit 45 is stored in the IC chip 13.

Therefore, by placing this IC card 11 close to a reader, wireless communication is carried out via an antenna 14, and the information stored in the affixed sticker 43 can be read out contactlessly. In this way, various types of information can be written into the IC card 11 without requiring a special writer by simply affixing the sticker 43, thus greatly enhancing the convenience. In particular, since the IC card 11 is thin, not only is it convenient for carrying around and storing, but it can also be placed on a desk or a table in a stable manner, and affixing the sticker 43 is therefore easy.

In accordance with this seventh embodiment, compared with the third embodiment to the sixth embodiment, a larger amount and more types of information can be stored.

If information (see FIG. 22B) stored in the information storage circuit 45 is printed on the surface of the sticker 43, a mistake can be prevented when selecting a particular sticker 43 from many types of stickers 43.

The third embodiment to the seventh embodiment of the present invention are explained above, but the present invention can be modified in a variety of ways as long as the modifications do not depart from the spirit and scope thereof.

For example, the IC card 11 of the embodiments is made of a synthetic resin, but another material such as paper may be used. When paper is used as a material, it can be used effectively as a questionnaire form, a reply form, a tag, etc.

Furthermore, the information storage/transmission system of the present invention is not limited to the thin IC card explained in the embodiments, and may include a thick IC tag, etc.

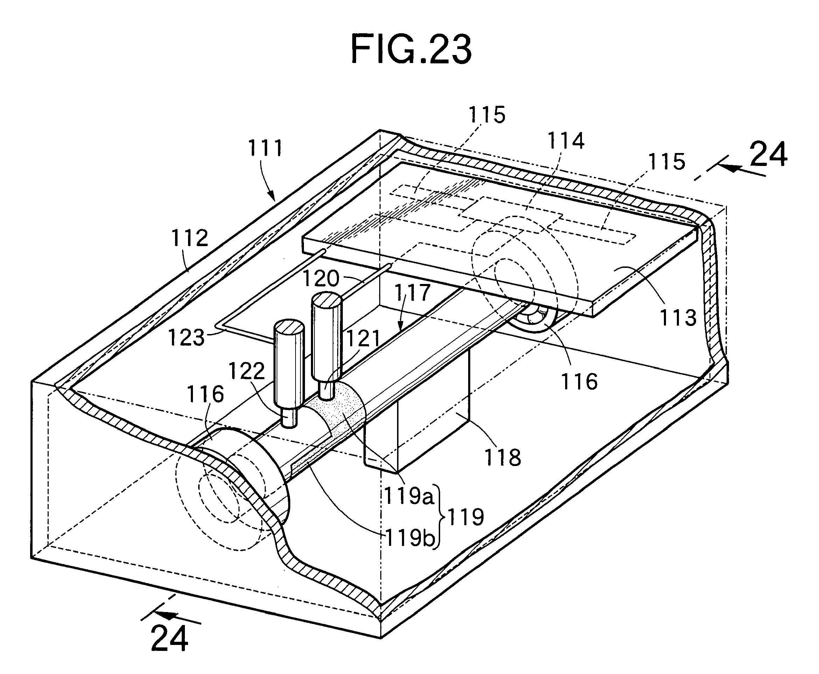

An eighth embodiment of the present invention is now explained by reference to FIG. 23 to FIG. 27.

### Embodiment 8

As shown in FIG. 23 to FIG. 25, an information storage/transmission system 111 includes a rectangular parallelepiped casing 112, an IC chip 114 including a CPU, a ROM, an I/O, etc., and an antenna 115 for carrying out wireless communication with an external reader (not illustrated), the IC chip 114 and the antenna 115 being embedded in a substrate 113 fixed to the interior of the casing 112. A synthetic resin rotating shaft 117 is rotatably supported on the casing 112 via a pair of bearings 116, and an eccentric weight 118 is fixed to a middle section of the rotating shaft 117. Therefore, regardless of whether a first face 112a or a second face 112b of the casing 112, which face each other, is made to face upward, the rotating shaft 117 rotates so that the weight 118 is positioned on the vertically lower side.

A conductive coating 119 is provided on part of the surface of the rotating shaft 117, and this conductive coating 119 is formed from a first portion 119a surrounding the outer periphery of the rotating shaft 117 over 360°, and a second portion 119b formed integrally with the first portion 119a and surrounding the outer periphery of the rotating shaft 117 over 180°. A first terminal 121 connected to the IC chip 114 via a lead 120 is fixed to an inner face of the casing 112 so as to be always in contact with the first portion 119a of the conductive coating 119, and a second terminal 122 connected to the IC chip 114 via a lead 123 is fixed to an inner face of the casing 112 so that it can come into contact with the second portion 119b of the conductive coating 119.

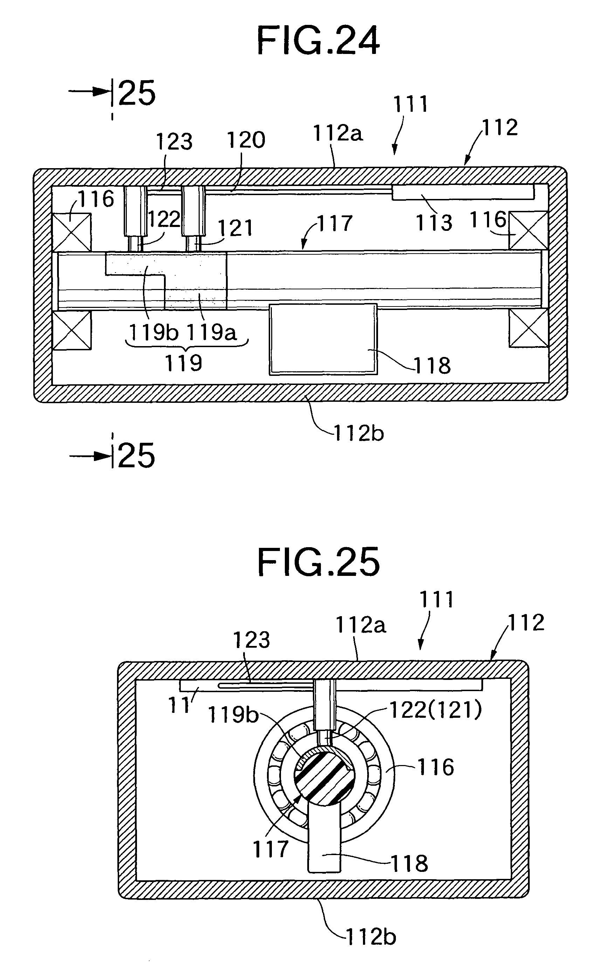

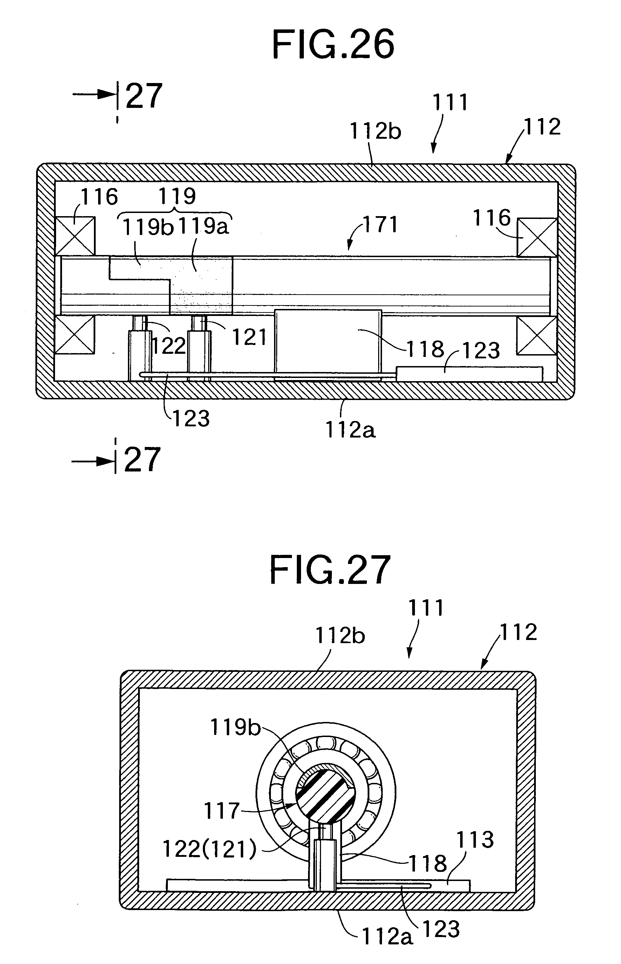

As shown in FIG. 24 and FIG. 25, when the information storage/transmission system 111 is placed on a desk or a table with the first face 112a of the casing 112 thereof facing upward, the rotating shaft 117 rotates so that the weight 118 faces downward, the second terminal 122 comes into contact with the second portion 119b of the conductive coating 119 and provides electrical continuity between the first and second terminals 121 and 122, and information for [1] is written into the IC chip 114. In contrast, as shown in FIG. 26 and FIG. 27, when the information storage/transmission system 111 is placed on a desk or a table with the second face 112b of the casing 112 thereof facing upward, since the rotating shaft 117 rotates so that the weight 118 faces downward, and the second terminal 122 separates from the second portion 119b of the conductive coating 119 so as to break the electrical continuity between the first and second terminals 121 and 122, information for [0] is written into the IC chip 114. Therefore, by placing this information storage/transmission system 111 close to a reader, wireless communication is carried out via the antenna 115, and information according to the attitude of the casing 112 can be read out contactlessly. In this way, information can be written into the information storage/transmission system 111 without requiring a special writer by simply changing the attitude of the casing 112, thus greatly enhancing the convenience.

By the use of this information storage/transmission system 111, for example, when an employee arrives at an office, the first face 112a of the casing 112 of the information storage/transmission system 111 is made to face upward, when the employee leaves the office, the second face 112b of the casing 112 is made to face upward, and it is thereby possible to know whether the employee is in the office or out of the office in a centralized manner.

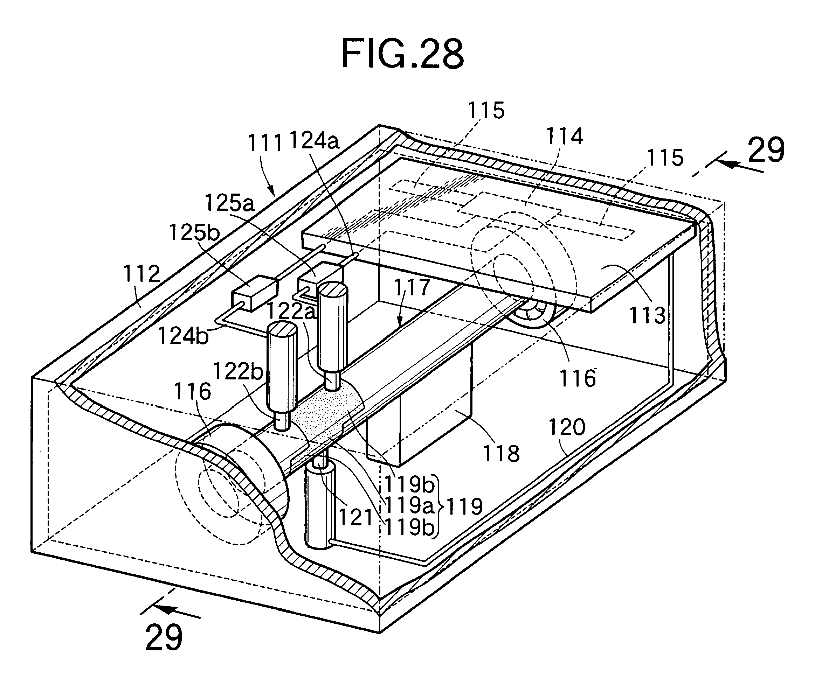

A ninth embodiment of the present invention is now explained by reference to FIG. 28 to FIG. 32. In the ninth embodiment to an eleventh embodiment, members corresponding to the members of the preceding embodiments (the eighth embodiment and thereafter) are denoted by the same reference numerals and symbols as in these embodiments, thereby avoiding duplication of the explanation.

### Embodiment 9

As shown in FIG. 28 to FIG. 30, a conductive coating 119 provided on the surface of a synthetic resin rotating shaft 117 of an information storage/transmission system 111 of the ninth embodiment is formed from a first portion 119a surrounding the outer periphery of the rotating shaft 117 over 360°, and two second portions 119b formed integrally with axially opposite sides of the first portion 119a and covering the outer periphery of the rotating shaft 117 over 180°, the phase difference between the two second portions 119b being 180°. A first terminal 121 provided on a casing 112 and connected to an IC chip 114 via a lead 120 is always in contact with the first portion 119a of the conductive coating 119, and two second terminals 122a and 122b provided on the casing 112 respectively face the two second portions 119b of the conductive coating 119 so that they can abut against the second portions 119b. A first information storage circuit 125a is connected to a middle section of a lead 124a connecting one of the second terminals, that is, 122a to the IC chip 114, and a second information storage circuit 125b is connected to a middle section of a lead 124b connecting the other one of the second terminals, that is, 122b to the IC chip 114.

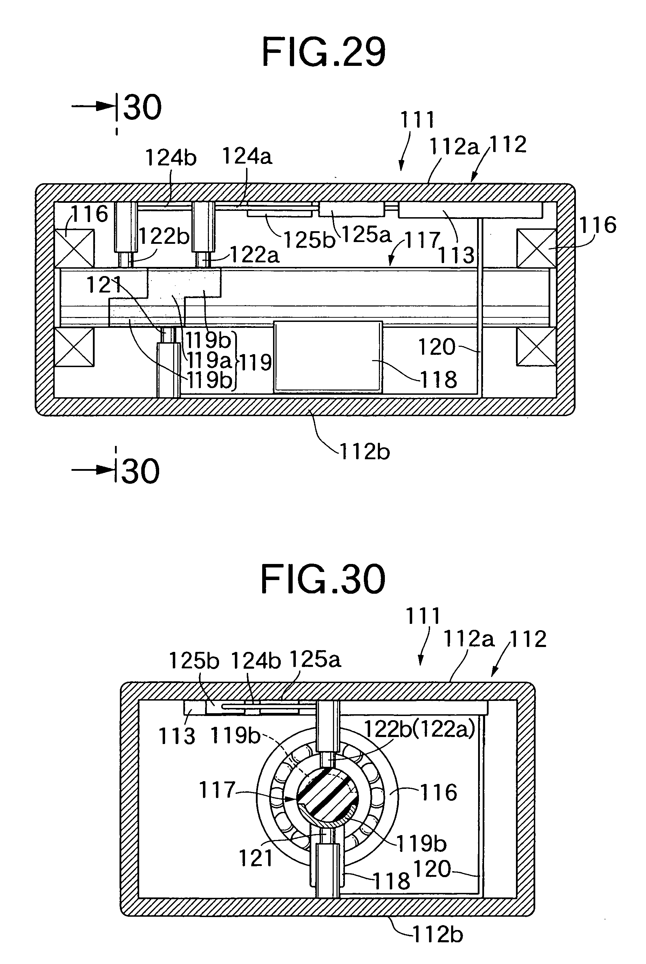

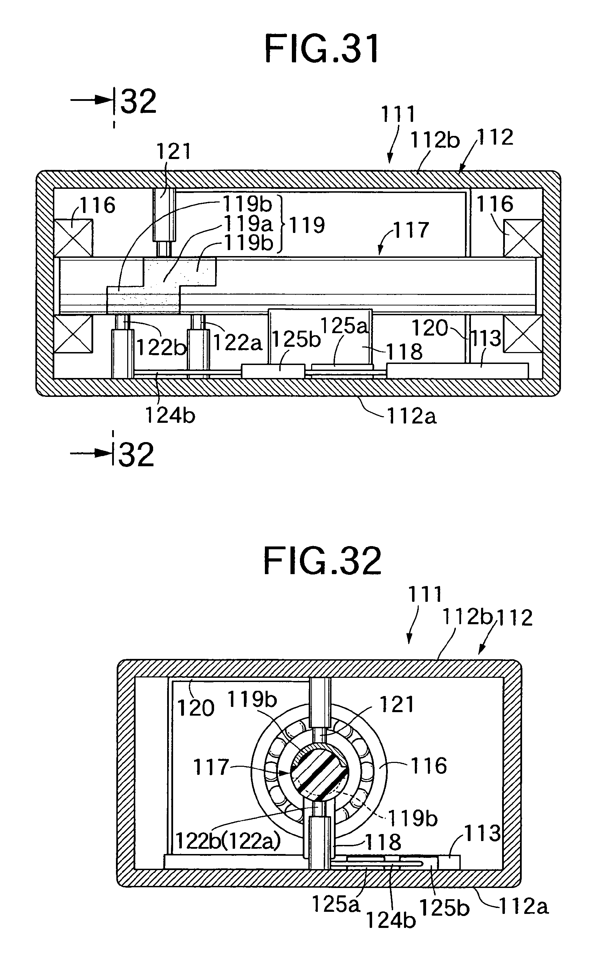

As shown in FIG. 29 and FIG. 30, when the information storage/transmission system 111 is placed on a desk or a table with the first face 112a of the casing 112 thereof facing upward, since the rotating shaft 117 rotates so that a weight 118 faces downward, and said one of the second terminals 122a comes into contact with one of the second portions 119b of the conductive coating 119, continuity between the first and second terminals 121 and 122a is provided via the conductive coating 119 and, for example, information [ABCDEFG] stored in the first information storage circuit 125a is stored in the IC chip 114. In contrast, as shown in FIG. 31 and FIG. 32, when the information storage/transmission system 111 is placed on a desk or a table with the second face 112b of the casing 112 thereof facing upward, since the rotating shaft 117 rotates so that the weight 118 faces downward, and said other one of the second terminals 122b comes into contact with the other one of the second portions 119b of the conductive coating 119, continuity between the first and second terminals 121 and 122b is provided via the conductive coating 119 and, for example, information [OPQRSTU] stored in the second information storage circuit 125b is stored in the IC chip 114.

Therefore, in accordance with this ninth embodiment, compared with the eighth embodiment, more complicated information can be stored.

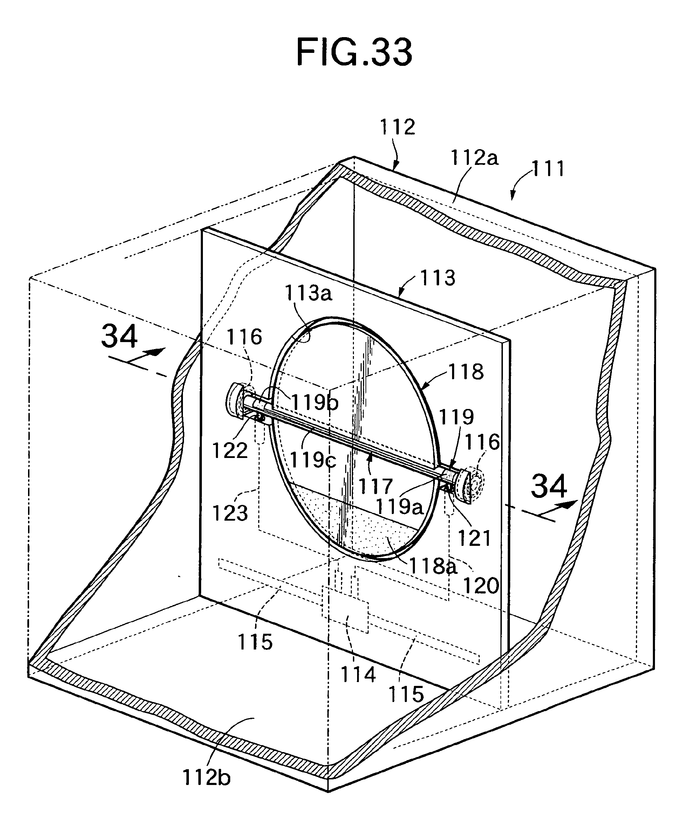

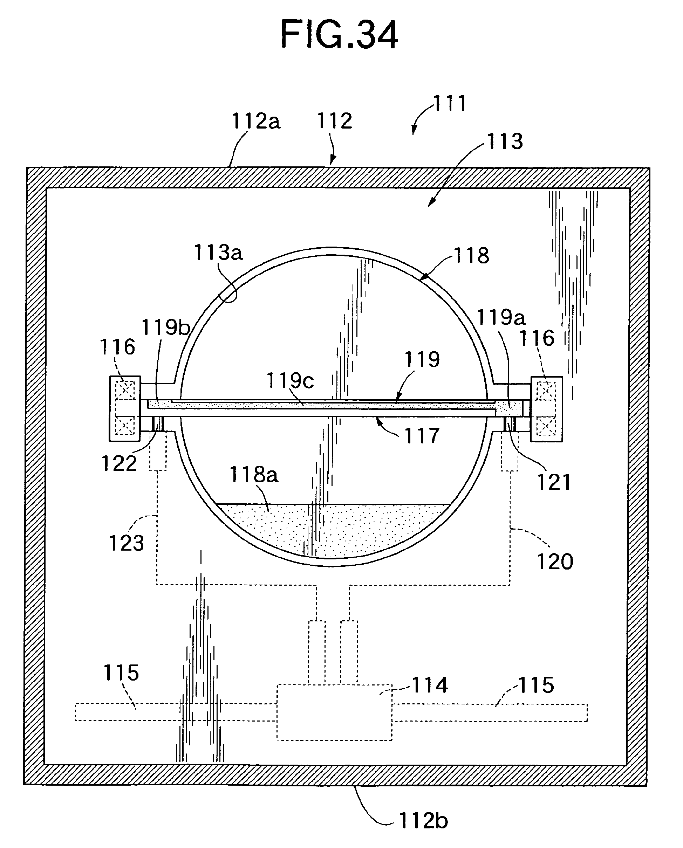

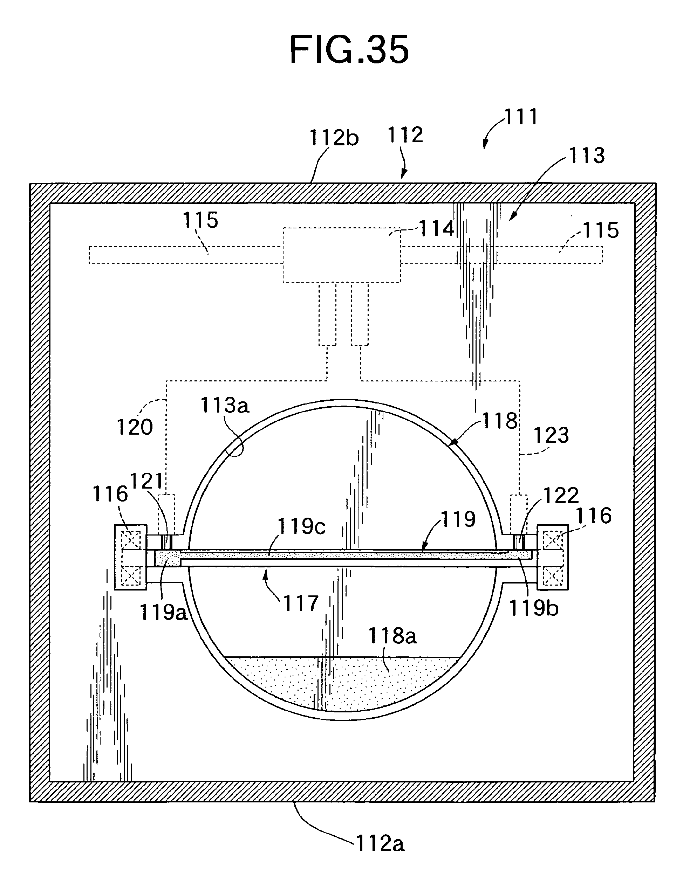

A tenth embodiment of the present invention is now explained by reference to FIG. 33 to FIG. 35.

### Embodiment 10

The tenth embodiment is a modification of the eighth embodiment, and whereas in the information storage/transmission system 111 of the eighth embodiment the rotating shaft 117 is supported on the casing 112 via the bearings 116, in an information storage/transmission system 111 of the tenth embodiment, a rotating shaft 117 is supported, via bearings 116, on a substrate 113 housed in a cuboidal casing 112. A disk-shaped weight 118 fixed to the rotating shaft 117 is fitted into an opening 113a of the substrate 113, and the rotating shaft 117 is biased by gravity so that a weighted portion 118a provided on the weight 118 is on the lower side.

A conductive coating 119 provided on the surface of the rotating shaft 117, which is made of a synthetic resin, is formed from a first portion 119a surrounding one end side of the rotating shaft 117 over 360°, a second portion 119b surrounding the other end side of the rotating shaft 117 over 180°, and two lead-shaped third portions 119c connecting the first and second portions 119a and 119b. A first terminal 121 provided on the substrate 113 is always in contact with the first portion 119a of the conductive coating 119, and a second terminal 122 provided on the substrate 113 faces the second portion 119b of the conductive coating 119 so that it can come into contact with the second portion 119b. The first and second terminals 121 and 122 are respectively connected to an IC chip 114 via leads 120 and 123 embedded in the substrate 113.

In accordance with this tenth embodiment, when the first face 112a or the second face 112b of the casing 112 is made to face upward, the continuity states of the first and second terminals 121 and 122 are switched over, the same operational effects as those of the eighth embodiment can be achieved and, furthermore, since the complete functionality as the information storage/transmission system 111 is centralized in the substrate 113, it can be housed in any shape of casing 112, thus improving the general versatility.

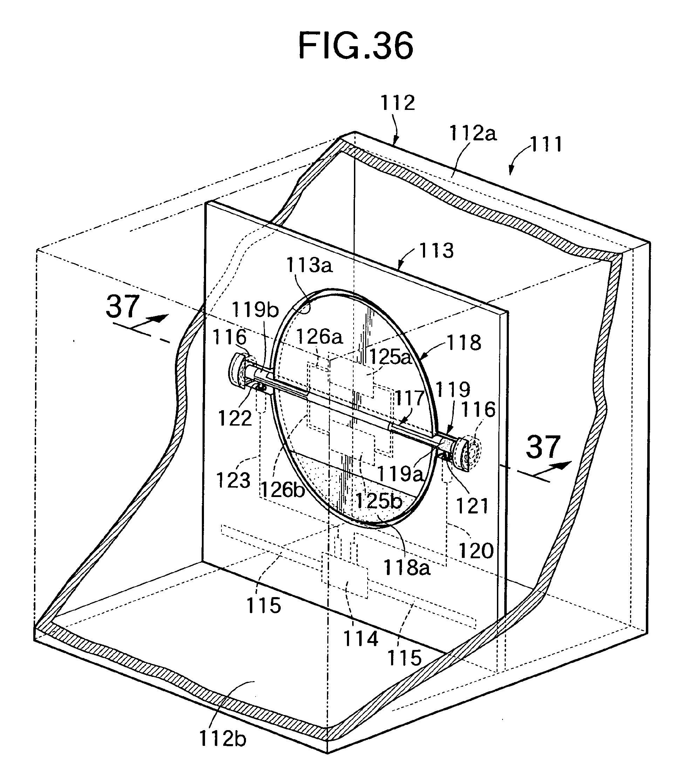

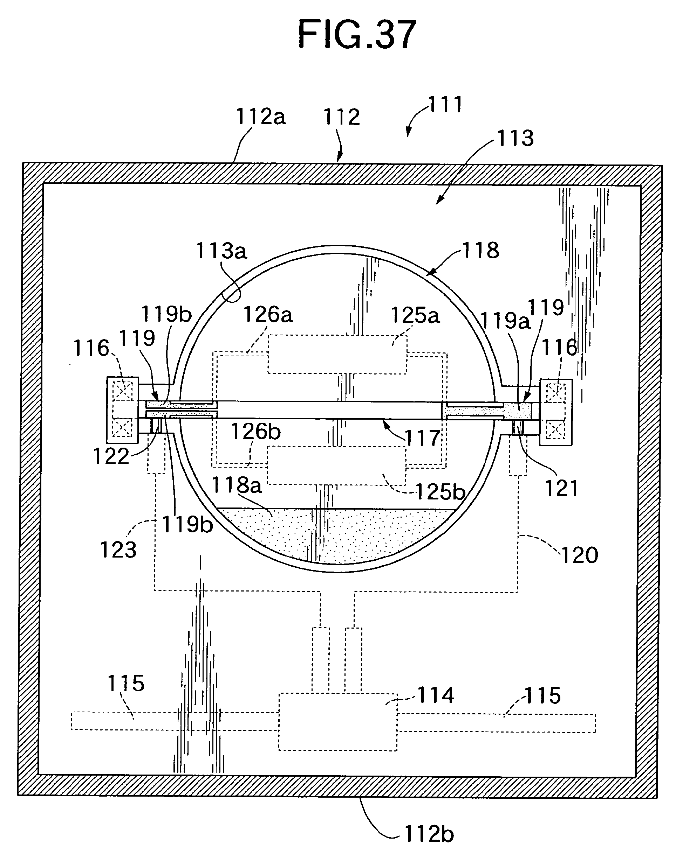

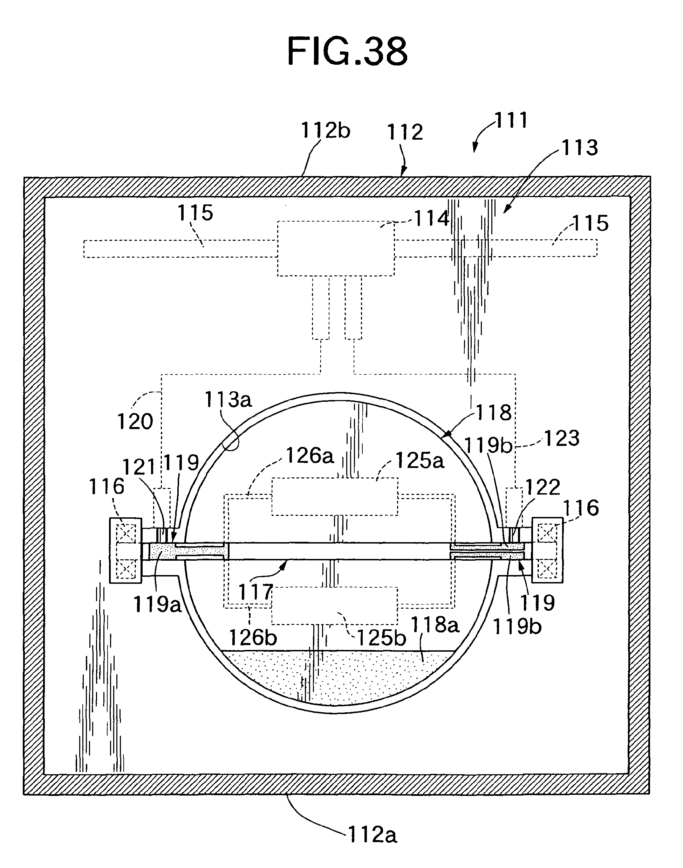

An eleventh embodiment of the present invention is now explained by reference to FIG. 36 to FIG. 38.

### Embodiment 11

The eleventh embodiment is a modification of the ninth embodiment; with the same structure as in the tenth embodiment, a conductive coating 119 of a rotating shaft 117 supported on a casing 112 via bearings 116 is formed from a first portion 119a surrounding, over 360°, a portion of the rotating shaft 117 that projects on one side from a weight 118, and a pair of second portions 119b surrounding, over about 180° each, a portion of the rotating shaft 117 that projects on the other side from the weight 118, a first terminal 121 is always in contact with the first portion 119a, and a second terminal 122 comes into contact with either one of the two second portions 119b. First and second information storage circuits 125a and 125b are connected respectively to first and second leads 126a and 126b connecting the first portion 119a to the pair of second portions 119b within the weight 18.

In accordance with this eleventh embodiment, by making a first face 112a or a second face 112b of the casing 112 face upward, since either one of the first and second information storage circuits 125a and 125b is present between the first and second terminals 121 and 122, the same operational effects as those of the ninth embodiment can be achieved and, furthermore, since the complete functionality as the information storage/transmission system 111 is centralized in a substrate 113, it can be housed in any shape of casing 112, thus improving the general versatility.

The eighth embodiment to the eleventh embodiment of the present invention are explained above, but the present invention can be modified in a variety of ways as long as the modifications do not depart from the spirit and scope thereof.

For example, in the embodiments the continuity state between the first terminal 121 and the second terminal 121 (122a, 122b) is switched over between two types, but it may be switched over between three or more types, thus increasing the number of pieces of information written. Moreover, two or three rotating shafts may be provided in perpendicular directions, and by combining these rotational states, yet more pieces of information can be written. The shape of the casing 112 is not limited to rectangular parallelepiped or cubic, and any polyhedron may be employed.

## Claims

1. An IC card in which an IC chip (3) and an antenna (4) are built into a card main body (2), information stored in the IC chip (3) being capable of being contactlessly read out by means of a reader, **characterized in that** the IC card comprises:
a circuit switchover part (6, 7) provided on a surface of the card main body (2); and
a circuit (5) connected to the IC chip (3), continuity/discontinuity states of the circuit (5) being switched over by switching over the circuit switchover part (6, 7);
the IC chip (3) being capable of transmitting to the reader a signal corresponding to the continuity/discontinuity state of the circuit (5) as the stored information.

2. An IC card in which an IC chip (3) and an antenna (4) are built into a card main body (2), information stored in the IC chip (3) being capable of being contactlessly read out by means of a reader, **characterized in that** the IC card comprises:
a conductive sticker (8) affixed to a surface of the card main body (2); and
a circuit (5) connected to the IC chip (3), continuity of the circuit (5) being broken by peeling off the conductive sticker (8);
the IC chip (3) being capable of transmitting to the reader a signal corresponding to the continuity/discontinuity state of the circuit (5) as the stored information.

3. An IC card in which an IC chip (3) and an antenna (4) are built into a card main body (2), information stored in the IC chip (3) being capable of being contactlessly read out by means of a reader, **characterized in that** the IC card comprises:
a plurality of conductive stickers (8) affixed to a surface of the card main body (2); and
a plurality of circuits (5) connected to the IC chip (3), continuity of the circuit (5) being broken by peeling off the conductive sticker (8);
the IC chip (3) being capable of transmitting to the reader a signal corresponding to the continuity/discontinuity states of the plurality of circuits (5) as the stored information.

4. An information storage/transmission system in which an IC chip (13) and an antenna (14) are built into a main body (12), information stored in the IC chip (13) being capable of being transmitted from the antenna (14) to a reader and read out contactlessly, **characterized in that** the system comprises:
a pair of terminals (15, 16) provided on a surface of the main body (12) and connected to the IC chip (13);
information corresponding to the continuity state of the pair of terminals (15, 16), which is changed by coating a section between the pair of terminals (15, 16) with a conductive ink (20), being capable of being transmitted to the reader via the IC chip (13) and the antenna (14).

5. The information storage/transmission system according to Claim 4, wherein the main body (12) is made in the form of a card.

6. The information storage/transmission system according to either Claim 4 or Claim 5 wherein, after the section between the pair of terminals (15, 16) is coated with the conductive ink (20), a sheet (21) is affixed to the surface of the main body (12).

7. The information storage/transmission system according to Claim 6, wherein the sheet (21) is transparent.

8. An information storage/transmission system in which an IC chip (13) and an antenna (14) are built into a main body (12), information stored in the IC chip (13) being capable of being transmitted from the antenna (14) to a reader and read out contactlessly, **characterized in that** the system comprises:
at least one first terminal (33) provided on a surface of the main body (12) and connected to the IC chip (13); a rotating body (31) rotatably provided on the main body (12); and a second terminal (35) provided on the rotating body (31) and connected to the IC chip (13), the second terminal (35) being capable of coming into contact with the first terminal (33) and providing continuity between itself and the first terminal (33) according to a rotational position of the rotating body (31);
information corresponding to the continuity states of the first terminal (33) and the second terminal (35) being capable of being transmitted to the reader via the IC chip (13) and the antenna (14).

9. The information storage/transmission system according to Claim 8, wherein the main body (12) is made in the form of a card.

10. The information storage/transmission system according to either Claim 8 or Claim 9 wherein, after the rotating body (31) is rotated to a predetermined position, a sheet (21) is affixed so as to straddle the main body (12) surface and the rotating body (31).

11. The information storage/transmission system according to Claim 10, wherein the sheet (21) is transparent.

12. An information storage/transmission system in which an IC chip (13) and an antenna (14) are built into a main body (12), information stored in the IC chip (13) being capable of being transmitted from the antenna (14) to a reader and read out contactlessly, **characterized in that** the system comprises:
a pair of first terminals (41) provided on a surface of the main body (12) and connected to the IC chip (13); an information storage member (43) that can be mounted on the surface of the main body (12); an information storage circuit (45) provided on the information storage member (43); and a pair of second terminals (44) provided on the information storage member (43) and being capable of coming into contact with the pair of first terminals (41) and providing continuity between themselves and the pair of first terminals (41);
information stored in the information storage circuit (45) being capable of being transmitted to the reader via the IC chip (13) and the antenna (14) by means of continuity between the first terminal (41) and the second terminal (44).

13. The information storage/transmission system according to Claim 12, wherein the main body (12) is made in the form of a card.

14. The information storage/transmission system according to Claim 12, wherein the information storage member (43) is made in the form of a sticker.

15. The information storage/transmission system according to any one of Claim 12 to Claim 14 wherein, after the information storage member (43) is mounted on the main body (12), a sheet (21) is affixed so as to straddle the main body (12) surface and the information storage member (43).

16. The information storage/transmission system according to Claim 15, wherein the sheet (21) is transparent.

17. An information storage/transmission system in which an IC chip (114) and an antenna (115) are built into a main body (12), information stored in the IC chip (114) being capable of being transmitted from the antenna (115) to a reader and read out contactlessly, **characterized in that** the system comprises:
a rotating shaft (117) rotatably supported on the main body (112) and having part of a surface formed from a conductor (119); and a first terminal (121) and a second terminal (122, 122a, 122b) connected to the IC chip (114) and being capable of coming into contact with the conductor (119);
information corresponding to the continuity states of the first terminal (121) and the second terminal (122, 122a, 122b), which change in response to rotation of the rotating shaft (117), being capable of being transmitted to the reader via the IC chip (114) and the antenna (115).

18. The information storage/transmission system according to Claim 17 wherein, when the attitude of the main body (112) is changed, the rotating shaft (117) rotates relative to the main body (112) so as to maintain a constant attitude relative to the direction of gravity.
